(19) Europäisches Patentamt
European Patent Office
Office européen des brevets

(11) **EP 2 490 448 A1**

(12) **EUROPÄISCHE PATENTANMELDUNG**

(43) Veröffentlichungstag:
**22.08.2012 Patentblatt 2012/34**

(51) Int Cl.:
***H04N 7/26*** (2006.01)      ***H04N 7/50*** (2006.01)

(21) Anmeldenummer: **11173094.1**

(22) Anmeldetag: **07.07.2011**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **18.02.2011 EP 11155011**

(71) Anmelder:
• **Siemens Aktiengesellschaft**
**80333 München (DE)**

• **Friedrich-Alexander-Universität Erlangen-Nürnberg**
**91054 Erlangen (DE)**

(72) Erfinder:
• **Weinlich, Andreas**
**91575 Windsbach (DE)**
• **Amon, Peter**
**81675 München (DE)**
• **Hutter, Andreas, Dr.**
**81673 München (DE)**
• **Kaup, André, Prof.**
**91090 Effeltrich (DE)**

(54) **Kodierverfahren und Bildkodiervorrichtung zur Kompression einer Bildsequenz**

(57)      Es wird ein Kodierverfahren (100, 300, 500) zur Kompression einer Bildsequenz (IS) beschrieben. Bei diesem Kodierverfahren (100, 300, 500) wird zunächst ein dichtes Bewegungsvektorfelds ($V_n$) für einen aktuellen Bildbereich ($I_n$) der Bildsequenz (IS) durch Vergleich mit zumindest einem weiteren Bildbereich ($I_{n-1}$) der Bildsequenz (IS) ermittelt. Es wird weiterhin ein Konfidenzvektorfeld ($K_n$) für den aktuellen Bildbereich ($I_n$) ermittelt, welches für jeden Bewegungsvektor des Bewegungsvektorfelds ($V_n$) zumindest einen Konfidenzwert angibt. Auf Basis des Bewegungsvektorfelds ($V_n$) und des Konfidenzvektorfeldes ($K_n$) werden dann Bewegungsvektorfeld-Rekonstruktionsparametern (FP, **c, B**) für den aktuellen Bildbereich ($I_n$) ermittelt. Darüber hinaus wird ein Dekodierverfahren (200, 400) zur Dekodierung von Bilddaten einer Bildsequenz (IS) beschrieben, die mit einem solchen Kodierverfahren (100, 300, 500) kodiert wurden. Außerdem werden eine Bildkodiervorrichtung (1, 1') zur Kompression einer Bildsequenz (IS) eine Bilddekodiervorrichtung (20, 20'), mit denen derartige Verfahren durchgeführt werden können, sowie ein System zur Übertragung und/oder Speicherung einer Bildsequenz (IS) umfassend eine solche Bildkodiervorrichtung (1, 1') und eine solche Bilddekodiervorrichtung (20, 20') beschrieben.

FIG 2

**Beschreibung**

Die Erfindung betrifft ein Kodierverfahren zur prädiktiven Kodierung zur Kompression einer Bildsequenz sowie ein Dekodierverfahren zur Dekodierung von Bildbereichen einer Bildsequenz, welche mit einem solchen Kodierverfahren kodiert wurde. Darüber hinaus betrifft die Erfindung eine Bildkodiervorrichtung zur Kompression einer Bildsequenz und eine entsprechende Bilddekodiervorrichtung sowie ein System aus einer solchen Bildkodiervorrichtung und einer Bilddekodiervorrichtung.

Unter einer Bildsequenz ist dabei im Folgenden eine beliebige Bildfolge, beispielsweise eine Abfolge von bewegten Bildern auf einem Film oder eine Folge von beispielsweise zeitlich und/oder räumlich benachbarten Schichten vom Inneren eines Objekts zu verstehen, wie sie mit medizintechnischen Geräten erfasst werden, durch die dann beispielsweise zur Betrachtung virtuell hindurch geflogen werden kann. Weiterhin umfasst eine Bildsequenz auch zeitliche Korrelationen in dynamischen Bilddaten wie z. B. dreidimensionalen zeitabhängigen Abbildungen bzw. Rekonstruktionen eines Objekts (sogenannte 3D+t-Rekonstruktionen), beispielsweise eines schlagenden Herzens. Unter einem Bildbereich sind dabei entweder ein oder mehrere vollständige Bilder dieser Bildsequenz oder auch nur ein Teil eines solchen Bilds zu verstehen. Dabei können die Bilder sowohl zweidimensionale Bilder sein als auch dreidimensionale Bilddaten. Das heißt, die einzelnen Bildpunkte können sowohl Pixel als auch Voxel sein, wobei im Folgenden der Einfachheit halber der Begriff Pixel verwendet wird und dabei auch - sofern nicht explizit anders erwähnt - Voxel umfasst sein sollen.

Derzeit werden in klinischen Umgebungen diagnostische medizinische Bilder üblicherweise in einer unkomprimierten oder zumindest verlustlos komprimierten Weise gespeichert, um die Anforderungen der Ärzte und gesetzliche Bedingungen zu erfüllen. Ein derzeit typischer Standard zur Abspeicherung solcher medizinischer Bilddaten ist im DICOM-Standard definiert. Anders als bei nicht komprimierten RAW-Bildern können im DICOM-Datensatz auch Bilder verlustlos in komprimierten Formaten wie z. B. TIFF oder JPEG 2000 hinterlegt werden. Solche Kompressionsmethoden für zweidimensionale Bilder sind jedoch nicht dafür geschaffen worden, um beispielsweise die o.g. 3D+t-Rekonstruktionen zu komprimieren, die z.B. mit bildgebenden Geräten wie Computertomographen oder Magnetresonanztomographen aufgezeichnet wurden. Daher werden bisher die Schichten von solchen Volumen als einzelne voneinander unabhängige Bilder gespeichert. Wenn also die Fähigkeiten der aktuellen bildgebenden Geräte zur Erzeugung hochaufgelöster 3D+t-Datensätze genutzt werden, entstehen bei jeder Untersuchung große Mengen an Bilddaten.

Insbesondere in solchen Bereichen aber auch in anderen ähnlichen Bereichen, in denen große Bilddatenmengen anfallen, werden zu einer schnellen und effizienten Übermittlung und Speicherung der Bilddaten folglich Kompressionsalgorithmen benötigt, die in den Bilddaten die räumlichen, zeitlichen und wahrscheinlichkeitstheoretischen Redundanzen möglichst gut nutzen. Um die gewünschte Entropiereduzierung zu erreichen, wird häufig die Modellannahme zu Grunde gelegt, dass zwischen räumlich benachbarten Pixeln nur kleine Intensitätsvariationen auftreten. Hierzu wird im Rahmen einer sogenannten "prädiktiven Kodierung" anhand von bereits gelesenen, bekannten Daten, beispielsweise von vorhergehenden Bildern einer Bildsequenz, versucht, eine Aussage über die kommenden bzw. aktuellen Bilddaten zu treffen. Es wird dann für ein aktuelles Bild der sogenannte "Restfehler", die Differenz zwischen einer Vorhersage eines Bildes und dem wahren Bild, sowie ausreichende Informationen zur Wiederherstellung der Vorhersage gespeichert bzw. übermittelt. Der Vorteil ist, dass bei einer guten Vorhersage die Abweichung zu den echten Werten nur sehr klein, nahe Null, ist. Das Grundprinzip ist hierbei, dass Werte, die häufiger vorkommen, mit nur kurzen Codewörtern gespeichert werden können und nur Werte, die seltener vorkommen, mit langen Codeworten gespeichert werden. Hierdurch wird insgesamt weniger Speicher- und/oder Übertragungskapazität für die Bilddaten benötigt.

Für eine solche prädiktive Kodierung können Bewegungsvektoren benutzt werden, um eine Bewegung von Objekten in einer Videosequenz oder in unterschiedlichen Schichten eines 3D-Volumens darzustellen. Hierbei kann mit einer entsprechend hohen Anzahl von Bewegungsvektoren zwar die exakte Änderung zwischen den einzelnen "Frames" (Bildern der Videosequenz bzw. Schichten) gut beschrieben werden. Andererseits kann jedoch der Overhead zur Kodierung der Bewegungsinformationen (d. h. die zusätzlich erforderlichen Informationen über die Bewegungsvektoren) die gesamte Effizienz der Kompression wieder zunichte machen.

Derzeitig übliche Videokompressionsalgorithmen versuchen daher, räumliche Variationen durch die Verwendung von sogenannten blockbasierten Translationsbewegungsvorhersagen zu reduzieren und so in zeitlicher Richtung zu kompensieren. Hierbei wird unter Minimierung einer Intensitätsdifferenz-Norm die Bewegung von vorbestimmten Pixelblöcken im aktuellen Bild relativ zum vorhergehenden Bild bestimmt. Wird diese Bewegungsinformation als Vorhersage- genutzt, muss lediglich wieder der Restfehler, d.h. die verbleibende Differenz, die auch bei diesem Verfahren erheblich weniger Variationen als das Originalbild enthält, übertragen bzw. gespeichert werden, um nach der Übertragung bzw. nach dem Auslesen aus dem Speicher eine verlustlose Rekonstruktion durch einen Decoder zu erreichen.

Ein Problem ist jedoch, dass solch ein statisches Vorhersageschema keine Rotationsbewegungen, Skalierungsbewegungen oder Deformationen sowie andere nicht-translatorische Bildbewegungen kompensieren kann. An Positionen, an denen solche Bewegungen auftreten, ist nicht nur die Unterdrückung von existierenden Intensitätsvariationen unmöglich, sondern es können sogar an den Blockgrenzen zusätzliche Variationen auftreten. Derartige einfache blockbasierte Verfahren sind folglich insbesondere für medizintechnische Bilddaten nicht besonders geeignet, da hier selten rein translatorische Bewegungen in den Bildern zu erwarten sind, sondern mehr Deformationsbewegungen des Gewebes, welche durch Muskelkontraktionen wie Herzschlag, Atmung etc. hervorgerufen werden.

Im Kompressions-Standard H.264/AVC ["Advanced video coding for generic audiovisual services," ITU-T Rec. H.264 and ISO/IEC 14496-10 (MPEG-4 AVC), 2010] werden verschiedene Verbesserungen des blockbasierten Verfahrens beschrieben, um solche Probleme zu reduzieren. Eine Verbesserung ist z.B. durch eine adaptive Veränderung der Blockgröße möglich, wobei die Blockgröße nicht einheitlich gewählt wird, sondern je nach Restfehler variiert wird. In einer anderen Methode wird vorgeschlagen, die Originalwerte des Bildes zu nehmen, wenn die Fehler zwischen Vorhersage und aktuellem Bild zu groß sind. Bei wieder einem anderen Verfahren werden mehrere Bilder gewichtet kombiniert und das so erhaltene Bild als Referenzbild für die Vorhersage verwendet. Weiterhin wird vorgeschlagen, Bilder mit starken Änderungen erst zu glätten und aus dem geglätteten Bild dann die Bewegungsvektoren zu ermitteln, um so eine bessere Vorhersage zu bekommen. Weiterhin gibt es einen Vorschlag, eine gitterbasierte Bewegungsabschätzung durchzuführen, bei der anstelle eines Blockrasters mit einem Dreiecksgitternetz gearbeitet wird und für jeden Dreieckspunkt die Bewegungsvektoren gespeichert werden, wobei Vektoren in den Dreiecken interpoliert werden. Gemäß einem anderen Vorschlag können mit einer affinen Blockdeformation zusätzlich zu den translatorischen Bewegungen affine Transformationen der Blöcke berücksichtigt werden [siehe Chung-lin Huang und Chao-yuen Hsu, "A new motion compensation method for image sequence coding using hierarchical grid interpolation" in IEEE Transactions on Circuits and Systems for Video Technology, Vol. 4, no. 1, pp. 42-52, Feb. 1994]. Diese Verfahren werden Jedoch aufgrund ihrer hohen Komplexität und der verstärkten Nutzung von Nebeninformationen bzw. ihrer Anwendbarkeit nur auf spezielle Datenformen bisher kauf genutzt.

Grundsätzlich können beliebige Bewegungen mit pixelbasierten Bewegungsvektorfeldern gut abgeschätzt werden, bei denen jedem Pixel ein eigener Bewegungsvektor zugeordnet ist. Die hierfür erforderlichen Nebeninformationen über die einzelnen Bewegungsvektoren sind jedoch derart hoch, dass sich solche Verfahren in der Regel verbieten, insbesondere wenn eine hochqualitative Kompression gewünscht wird. Daher müssen solche Informationen selber in einem verlustbehafteten Verfahren reduziert werden. In einer Veröffentlichung von S.C. Han und C.I. Podilchuk, "Video compression with dense motion fields", in IEEE Transactions on Image Processing, vol. 10, no. 11, pp. 1605-12, Jan. 2001, wird dies erreicht, indem ein Auswahlalgorithmus verwendet wird, bei dem alle nicht markanten Bewegungsvektoren in einem hierarchischen Quadtree eliminiert werden. Die verbleibenden Vektoren werden dann in einem adaptiven arithmetischen Entropiekodierer kodiert. Im Prinzip handelt es sich hierbei um ein ähnliches Verfahren wie bei einem adaptiven Blockverfahren gemäß der Norm H.264/AVC, wobei jedoch hier nicht nur die Bewegungsvektoren von Blöcken sondern auch jedes einzelnen Pixels geprüft werden. Dieses Verfahren ist somit relativ zeitaufwändig.

Es ist eine Aufgabe der vorliegenden Erfindung, ein verbessertes Kodierverfahren und eine Bildkodiervorrichtung zu schaffen, mit dem insbesondere auch bei Bildsequenzen mit komplizierten Bewegungen eine effizientere Kompression, insbesondere auch eine verlustfrei Kompression, möglich ist.

Diese Aufgabe wird durch ein Kodierverfahren nach Patentanspruch 1 sowie durch eine Bildkodiervorrichtung nach Patentanspruch 13 gelöst.

Das erfindungsgemäße Kodierverfahren umfasst folgende Verfahrensschritte:

Zunächst erfolgt eine Ermittlung eines dichten Bewegungsvektorfelds ("Dense Motion Vector Field") für einen aktuellen Bildbereich der Bildsequenz durch Vergleich mit zumindest einem weiteren Bildbereich der Bildsequenz. Unter einem "dichten Bewegungsvektorfeld" im Sinne dieser Erfindung ist ein Bewegungsvektorfeld zu verstehen, bei dem einzelnen Pixeln bzw . Voxeln, vorzugsweise jedem Pixel bzw. Voxel, des betrachteten Bildbereichs ein eigener Bewegungsvektor oder zumindest eine Bewegungsvektorkomponente zugeordnet ist, im Gegensatz zu blockbasierten Bewegungsvektorfeldern, bei denen vorab Blöcke definiert und nur für diese Blöcke Bewegungsvektoren bestimmt werden. Als ein "ausgedünntes dichtes" Bewegungsvektorfeld wird im Folgenden ein solches dichtes Bewegungsvektorfeld mit pixel- bzw. voxelbasierten Bewegungsvektoren oder Bewegungsvektorkomponenten verstanden, welches im Laufe der erfindungsgemäßen Kompression bereits ausgedünnt wurde, d. h. bei dem Bewegungsvektoren bereits ausselektiert wurden.

Wie bereits oben erwähnt, ist ein Bildbereich in der Regel ein komplettes Bild der Bildsequenz. Prinzipiell kann es sich jedoch auch nur um einen Teil eines solchen Bildes handeln. Der zum Vergleich herangezogene weitere Bildbereich der Bildsequenz ist dann ein entsprechender Bildbereich in einem weiteren Bild, beispielsweise in einem vorhergehenden und/oder nachfolgenden Bild, wobei es auch hier möglich ist, nicht nur ein weiteres Bild zu verwenden, sondern eine Anzahl von weiteren Bildern, die beispielsweise gewichtet kombiniert werden oder dergleichen.

Bei einem bevorzugten Verfahren erfolgt die Ermittlung des dichten Bewegungsvektorfelds unter Nutzung eines sogenannten optischen Flussverfahrens ("Optical Flow"), im Gegensatz zu einer einfachen Bewegungsschätzung. Derartige Optical-Flow-Verfahren sind dem Fachmann bekannt und müssen daher hier nicht weiter erläutert werden.

In einem weiteren Schritt, welcher gleichzeitig oder nach der Ermittlung des Bewegungsvektorfelds erfolgen kann, wird erfindungsgemäß ein Konfidenzvektorfeld für den aktuellen Bildbereich ermittelt. Dieses Konfidenzvektorfeld gibt für jeden Bewegungsvektor des Bewegungsvektorfelds zumindest einen Konfidenzwert an. Der Konfidenzwert gibt an, mit welcher Wahrscheinlichkeit der geschätzte Bewegungsvektor tatsächlich korrekt ist, d.h. wie gut die Schätzung vermutlich ist. Dabei ist es auch möglich, dass vektoriell unterschiedliche Konfidenzwerte ermittelt werden, d. h. dass der Konfidenzwert selber ein Vektor oder eine Vektorkomponente ist, wobei die Vektorkomponenten jeweils den Konfidenzwert angeben, d.h. wie gut der Bewegungsvektor in Zeilen- oder Spaltenrichtung (im Folgenden auch als x- bzw. y-Richtung bezeichnet) des Bildes ist. In diesem Zusammenhang wird darauf hingewiesen, dass im Folgenden zwar das Verfahren der Einfachheit halber anhand von zweidimensionalen Bildern beschrieben wird, jedoch eine Ausdehnung auf ein dreidimensionales Verfahren ohne Weiteres möglich ist, indem einfach eine dritte Vektorkomponente in z-Richtung hinzugenommen wird.

Schließlich werden für den aktuellen Bildbereich auf Basis des Bewegungsvektorfelds und des Konfidenzvektorfelds Bewegungsvektorfeld-Rekonstruktionsparameter ermittelt.

Diese Bewegungsvektorfeld-Rekonstruktionsparameter können dann z.B. in einem Speicher hinterlegt oder über einen Übertragungskanal übertragen werden und können dann wieder zu einer Rekonstruktion des dichten Bewegungsvektorfelds genutzt werden, wobei die genaue Rekonstruktionsmethode davon abhängt, welche Art von Bewegungsvektorfeld-Rekonstruktionsparametern ermittelt werden. Hierfür gibt es verschiedene Möglichkeiten, die später noch detaillierter erläutert werden.

Durch die Nutzung des Konfidenzvektorfelds zusätzlich zum Bewegungsvektorfeld bei der Ermittlung der Bewegungsvektorfeld-Rekonstruktionsparameter kann auf relativ einfache Weise sichergestellt werden, dass mit den ermittelten Bewegungsvektorfeld-Rekonstruktionsparametern eine sehr gute Rekonstruktion des Bewegungsvektorfelds möglich ist. Dabei kann nicht nur die Menge der benötigten Daten zur Rekonstruktion des Bewegungsvektorfelds stark reduziert werden, sondern durch die Verwendung der Konfidenzwerte wird sogar noch darauf geachtet, dass nur die besonders verlässlichen Bewegungsvektoren verwendet werden und so neben einer erheblichen Datenreduzierung die Qualität der Rekonstruktion erhöht wird.

Wenn das Verfahren in einem Rahmen eingesetzt wird, bei dem neben den Informationen zur Bewegungsvektorfeld-Rekonstruktion für eine Bildprädiktion auch in üblicher Weise die Restfehlerdaten gespeichert bzw. übermittelt werden, um so verlustlos Bilder zu speichern oder zu übertragen, führt das Verfahren im Verhältnis zu herkömmlichen blockbasierten Bewegungsschätzungsverfahren nur zu relativ geringen Nebeninformationen. Dabei werden Blockbildungsartefakte oder andere schnelle Variationen innerhalb der Restfehlerkodierung vermieden und hohe Werte für die Restfehler effizient unterdrückt, was weiterhin zu einer besonders effektiven Kompressionsmethode führt.

Eine erfindungsgemäße Bildkodiervorrichtung benötigt zum komprimieren einer Bildsequenz mit einem derartigen Verfahren u. a. folgende Komponenten:

-    eine Bewegungsvektorfeld-Ermittlungseinheit zur Ermittlung eines dichten Bewegungsvektorfelds für einen aktuellen Bildbereich der Bildsequenz durch Vergleich mit zumindest einem weiteren Bildbereich der Bildsequenz,
-    eine Konfidenzvektorfeld-Ermittlungseinheit zur Ermittlung eines Konfidenzvektorfelds für den aktuellen Bildbereich, welches für jeden Vektor des Bewegungsvektorfelds zumindest einen Konfidenzwert angibt,
-    eine Rekonstruktionsparameter-Ermittlungseinheit zur Ermittlung von Bewegungsvektorfeld-Rekonstruktionsparametern für den aktuellen Bildbereich auf Basis des Bewegungsvektorfelds und des Konfidenzvektorfelds.

Um eine mit dem erfindungsgemäßen Verfahren kodierte Bildsequenz zu dekodieren, wird ein Dekodierverfahren benötigt, bei dem für einen aktuellen Bildbereich auf Basis der Bewegungsvektorfeld-Rekonstruktionsparameter ein Bewegungsvektorfeld rekonstruiert wird und darauf basierend - und basierend auf dem weiteren Bildbereich, welcher dazu verwendet wurde, um das Bewegungsvektorfeld zu ermitteln - eine Bildbereichsprädiktion ermittelt wird.

Eine Bilddekodiervorrichtung zur Durchführung dieses Dekodierverfahrens benötigt dementsprechend

-    eine Bewegungsvektorfeld-Rekonstruktionseinheit, um für einen aktuellen Bildbereich auf Basis der Bewegungsvektorfeld-Rekonstruktionsparameter ein Bewegungsvektorfeld zu rekonstruieren, und
-    eine Prädiktionsbild-Generierungseinheit, um basierend auf dem Bewegungsvektorfeld - und basierend auf dem für die Erzeugung des Bewegungsvektorfelds verwendeten weiteren Bildbereich - eine Bildbereichsprädiktion zu ermitteln.

Die erfindungsgemäßen Kodierverfahren und Dekodierverfahren können in einem Verfahren zur Übertragung und/oder Speicherung einer Bildsequenz eingesetzt werden, wobei vor der Übertragung und/oder Speicherung die Bildbereiche der Bildsequenz mit dem erfindungsgemäßen Verfahren kodiert werden und nach der Übertragung und/oder nach einer Entnahme aus dem Speicher mit dem entsprechenden Dekodierverfahren wieder dekodiert werden. Dementsprechend weist ein erfindungsgemäßes System zur Übertragung und/oder Speicherung einer Bildsequenz zumindest eine erfindungsgemäße Bildkodiervorrichtung und eine erfindungsgemäße Bilddekodiervorrichtung auf.

Die erfindungsgemäße Kodiervorrichtung sowie die erfindungsgemäße Bilddekodiervorrichtung können insbesondere auch in Form von Software auf geeigneten Bildverarbeitungs-Rechnereinheiten mit entsprechenden Speichermöglichkeiten realisiert sein. Dies gilt insbesondere für die Bewegungsvektorfeld-Ermittlungseinheit, die Konfidenzvektorfeld-Ermittlungseinheit, die Rekonstruktionsparameter-Ermittlungseinheit sowie die Bewegungsvektorfeld-Rekonstruktionseinheit und die Prädiktionsbild-Generierungseinheit, die beispielsweise in Form von Softwaremodulen realisiert sein können. Ebenso können diese Einheiten aber auch als Hardwarekomponenten ausgebildet sein, beispielsweise in Form von geeignet aufgebauten ASICs. Eine weitgehend softwaremäßige Realisierung hat den Vorteil, dass auch schon bisher verwendete Bildkodiervorrichtungen und Bilddekodiervorrichtungen auf einfache Weise durch ein Software-Update nachgerüstet werden können, um auf die erfindungsgemäße Weise zu arbeiten. Die Erfindung erfasst somit auch ein Computerprogrammprodukt, welches direkt in einen Speicher eines Bildverarbeitzingsrechners ladbar ist, mit Programmcodeabschnitten, um alle Schritte eines der erfindungsgemäßen Verfahren auszuführen, beispielsweise in einem Bildverarbeitungsrechner zur Ausbildung einer Bildkodiervorrichtung oder in einem Bildverarbeitungsrechner zur Ausbildung einer Bilddekodiervorrichtung, wenn das Programm in dem Bildverarbeitungsrechner ausgeführt wird.

Die abhängigen Ansprüche sowie die nachfolgende Beschreibung enthalten besonders vorteilhafte Weiterbildungen und Ausgestaltungen der Erfindung, wobei insbesondere auch die Ansprüche einer Kategorie analog zu den abhängigen Ansprüche einer anderen Anspruchskategorie weitergebildet sein können. Ebenso können einzelne Merkmale oder Merkmalsgruppen der Ansprüche zu neuen Ausführungsbeispielen kombiniert werden.

Die im erfindungsgemäßen Kodierverfahren ermittelten Bewegungsvektorfeld-Rekonstruktionsparameter könnten prinzipiell so für eine einfache verlustbehaftete Kompression einer Bildsequenz genutzt werden.

Vorzugsweise wird im Rahmen des Kodierverfahrens mittels der Bewegungsvekto-rfeld-Rekonstruktionsparameter zunächst wieder ein Bewegungsvektorfeld rekonstruiert. Es wird dann auf Basis der Bewegungsvektoren (ausschließlich) des rekonstruierten Bewegungsvektorfelds sowie auf Basis des für die ursprüngliche Ermittlung des Bewegungsvektorfelds verwendeten weiteren Bildbereichs eine Bildbereichsprädiktion für den aktuellen Bildbereichs ermittelt. Dann werden Restfehlerdaten z.B. durch Differenzbildung des aktuellen Bildbereichs und der Bildbereichsprädiktion ermittelt und schließlich werden die Bewegungsvektorfeld-Rekonstruktionsbildparameter mit den Restfehlerdaten des aktuellen Bildbereichs verknüpft. Die Daten können dann gespeichert und/oder übertragen werden.

Eine Verknüpfung der Bewegungsvektorfeld-Rekonstruktionsparameter mit den Restfehlerdaten kann dabei durch eine direkte Datenverbindung, beispielsweise in Form eines Multiplex-Verfahrens oder einem ähnlichen geeigneten Verfahren, erfolgen. Es reicht aber im Prinzip aus, wenn nach der Speicherung bzw. Übertragung in irgendeiner Weise feststellbar ist, welche Bewegungsvektorfeld-Rekonstruktionsparameter zu welchen Restfehlerdaten gehören. Bei der Dekodierung kann dann nach einer Extraktion der Restfehlerdaten und der Bewegungsvektorfeld-Rekonstruktionsparameter aus den übertragenen und/oder gespeicherten Daten, beispielsweise im Rahmen eines Demultiplex-Verfahrens, aus den Bewegungsvektorfeld-Rekonstruktionsparametern wieder ein Bewegungsvektorfeld rekonstruiert und darauf basierend die Bildbereichsprädiktion ermittelt werden. Mit Hilfe der Restfehlerdaten kann dann der aktuelle Bildbereich wieder exakt rekonstruiert werden.

Eine erfindungsgemäße Bildkodiervorrichtung braucht hierzu eine entsprechende Bewegungsvektorfeld-Rekonstruktionseinheit, wie sie beispielsweise auch auf Seiten der Bilddekodiervorrichtung vorgesehen ist, sowie einen Vergleicher, um die Restfehlerdaten, d.h. die Abweichungen des aktuellen Bildbereichs von der Bildbereichsprädiktion, zu ermitteln, und eine geeignete Kodiereinheit, um diese Restfehlerdaten passend zu kodieren und beispielsweise mit Hilfe einer geeigneten Verknüpfungseinheit, wie einem Multiplexer, mit den Bewegungsvektorfeld-Rekonstruktionsparametern zu verknüpfen.

Entsprechend wird dann auf Seiten der Bilddekodiervorrichtung zunächst eine Datenseparationseinheit, wie ein Demultiplexer, zur Separation der Bewegzingsvektorfeld-Rekonstruktionsparameter von den Restfehlerdaten, sowie eine Einheit zur Dekodierung der Restfehlerdaten und eine Kombinationseinheit benötigt, um aus den Prädiktionsbilddaten und den dekodierten Restfehlerdaten wieder, vorzugsweise verlustlos, den exakten aktuellen Bildbereich zu ermitteln.

Bei einer besonders bevorzugten Variante des Verfahrens werden das Bewegungsvektorfeld und/oder das Konfidenzvektorfeld komponentenweise in Form von Vektorkomponentenfeldern erzeugt und/oder bearbeitet. D. h. es werden beispielsweise bei einem zweidimensionalen Bild die x- und y-Komponente des Bewegzingsvektorfelds getrennt behandelt und somit zwei Vektorkomponentenfelder erzeugt. Entsprechend können, wie bereits oben erwähnt, auch getrennte Konfidenzvektorkomponentenfelder erzeugt werden, welche jeweils die Güte der Vektorkomponenten in eine der beiden Richtungen angeben. Es ist klar, dass auch hier eine Erweiterung auf eine dritte Dimension in z-Richtung prinzipiell möglich ist.

Eine getrennte Behandlung der Vektorkomponenten in unterschiedliche Richtungen hat den Vorteil, dass berücksichtigt werden kann, dass möglicherweise ein Vektor an einem bestimmten Bildpunkt bzw. Pixel durchaus in einer Richtung mit hoher Wahrscheinlichkeit sehr genau bestimmt werden kann, wogegen er in die andere Richtung nur ungenau bestimmt werden kann. Ein Beispiel hierfür ist ein Bildpunkt, der an einer in x-Richtung verlaufenden Kante eines Objekts liegt. Da in y-Richtung durch den Sprung an der Kante der Kontrastunterschied sehr groß ist, lässt sich in y-Richtung mit relativ hoher Genauigkeit eine Verschiebung des Bildpunkts zwischen zwei aufeinanderfolgenden Bildern detektieren, so dass der Bewegungsvektor in dieser Richtung sehr genau bestimmbar ist. Dagegen ist eine Bestimmung der Bewegungsvektorkomponente in Längsrichtung der Kante aufgrund der vermutlich geringen oder gar nicht detektierbaren Änderung eher gering.

Für die Ermittlung der Bewegungsvektorfeld-Rekonstruktionsparameter gibt es verschiedene Möglichkeiten.

Bei einer besonders bevorzugten Variante werden im Rahmen des Verfahrens relevante Merkmalspunkten des Bewegungsvektorfelds ermittelt und die Bewegungsvektorfeld-Rekonstruktionsparameter enthalten dann jeweils eine Ortsinformation, beispielsweise Ortskoordinaten oder sonstige Daten zur Identifizierung eines relevanten Merkmalspunkts, und zumindest eine Komponente eines Bewegungsvektors an dem betreffenden relevanten Merkmalspunkt. Das heißt, es werden für jeden relevanten Merkmalspunkt die Position des Pixels sowie zumindest eine zugehörige Bewegungsvektorkomponente ermittelt.

Dabei wird zur Ermittlung der relevanten Merkmalspunkte bevorzugt zunächst eine Gruppe von Kandidaten-Merkmalspunkten, die jeweils wieder die Ortsinformation des betreffenden Pixels und zumindest eine zugehörige Bewegungsvektorkomponente umfassen, auf Basis des Konfidenzvektorfelds bestimmt. Dies kann beispielsweise dadurch erfolgen, dass lokale Maxima des Konfidenzvektorfelds bestimmt werden. Aus diesen Kandidaten-Merkmalspunkten können dann relevante Merkmalspunkte selektiert werden. Eine geeignete Kodiervorrichtung benötigt hierzu beispielsweise eine Kandidaten-Merkmalspunkt-Ermittlungseinheit, wie z.B. eine Maxima-Detektionseinrichtung, die ein Konfidenzvektorfeld hinsichtlich dieser lokalen Maxima durchsucht, sowie eine Merkmalsauswahleinheit.

Bei einer besonders bevorzugten Weiterbildung des Verfahrens kann zur Selektion der relevanten Merkmalspunkte aus den Kandidaten-Merkmalspunkten für einzelne Kandidaten-Merkmalspunkte, vorzugsweise jeden der Kandidaten-Merkmalspunkte, jeweils ein dichtes Bewegungsvektorfeld und/oder eine Bildbereichsprädiktion für den aktuellen Bildbereich ohne eine zu diesem Kandidaten-Merkmalspunkt gehörende Bewegungsvektorkomponente erzeugt werden. Es kann dann die Auswirkung auf das Bewegungsvektorfeld und/oder die Bildbereichsprädiktion geprüft werden. Mit anderen Worten, die Ermittlung der relevanten Merkmalspunkte aus den Kandidaten-Merkmalspunkten erfolgt durch die Ermittlung der Wirkung, ob diese Kandidaten-Merkmalspunkte vorhanden sind oder nicht.

Dabei kann beispielsweise geprüft werden, ob die Abweichungen zwischen der Bildbereichsprädiktion mit dem und ohne diesen Bewegungsvektor unter einem vorgegebenen Schwellwert liegen. Ist dies der Fall, dann ist der Kandidaten-Merkmalspunkt kein relevanter Herkmalspunkt. Bei einer anderen Alternative werden die Abweichungen zwischen den Bildbereichsprädiktionen mit dem und ohne den betreffenden Bewegungsvektor jeweils registriert. Dieser Test wird für jeden der Kandidaten-Merkmalspunkte durchgeführt und die Ergebnisse beispielsweise ebenfalls in einem Feld bzw. Vektorfeld hinterlegt. Die n Merkmalspunkte mit den geringsten Abweichungen sind dann die relevanten Merkmalspunkte, wobei n eine vorher festgelegte Anzahl ist. Auch bei diesem Verfahren kann wieder komponentenweise separat gearbeitet werden.

Dieses erste Verfahren beruht also auf der Idee, dass aus dem dichten Vektorfeld mit Hilfe der Konfidenzwerte des Konfidenzvektorfelds ein ausgedünntes dichtes Vektorfeld erzeugt wird, welches nur noch die Vektoren bzw. Vektorkomponenten für die wirklich relevanten Merkmalspunkte bzw. Pixel enthält.

Für die Rekonstruktion des dichten Bewegungsvektorfelds werden dann vorzugsweise diese Kandidaten-Merkmalspunkte bzw. deren Bewegungsvektorkomponenten als "Stutzstellen" verwendet, um beispielweise in einem nicht-linearen Verfahren die anderen Bewegungsvektoren des dichten Bewegungsvektorfelds zu interpolieren bzw. zu extrapolieren. Das heißt, die Ermittlung des dichtes Bewegungsvektorfelds erfolgt durch "Anfitten" von Flächen auf Basis geeigneter Basisfunktionen an diese Stützstellen. Die Bewegungsvektorfeld-Rekonstruktionseinheit besitzt hierzu vorzugsweise eine Einheit zur nicht-linearen Interpolation bzw. Extrapolation der Bewegungsvektoren auf Basis der Bewegungsvektorkomponenten der Kandidaten-Merkmalspunkte.

Bei einem alternativen zweiten Verfahren werden als Bewegungsvektorfeld-Rekonstruktionsparameter auf Basis des Bewegungsvektorfelds und des Konfidenzvektorfelds Koeffizienten ermittelt, um das Bewegungsvektorfeld mit Hilfe von vorgegebenen Basisfunktionen zu rekonstruieren. Diese Koeffizienten können vorzugsweise in einem linearen Regressionsverfahren ermittelt werde. Es kann dann die Rekonstruktion des Bewegungsvektorfelds mittels der Koeffizienten einfach durch eine Linearkombination der vorgegebenen Basisfunktionen erfolgen.

Dabei können bei einer bevorzugten Variante die Basisfunktionen vorgegeben sein. Hierzu müssen die Basisfunktionen nicht nur der Bildkodiervorrichtung, sondern auch der Bilddekodiervorrichtung vorab bekannt sein. Jedoch reicht es dann aus, auf einfache Weise die Koeffizienten zu bestimmen und nur diese als Nebeninformationen beispielsweise neben den Restfehlerdaten zu übermitteln.

Bei einer alternativen Variante dieses zweiten Verfahrens werden auf Basis des Bewegungsvektorfelds und des Konfidenzvektorfelds zu den Koeffizienten gehörende Basisfunktionen zur Rekonstruktion des Bewegungsvektorfelds mit ermittelt. Diese können beispielsweise aus einer Gruppe von vorgegebenen Basisfunktionen ausgewählt werden. Bei diesem Verfahren ist es folglich nicht erforderlich, dass die Bilddekodiervorrichtung vorab über die Basisfunktionen informiert ist. Stattdessen müssen die ermittelten Basisfunktionen oder Informationen, um die Basisfunktionen zu identifizieren, mit den Koeffizienten und ggf. den Restfehlerdaten übermittelt bzw. gespeichert werden.

Bei allen vorgenannten Verfahren kann das Konfidenzvektorfeld vorzugsweise ermittelt werden, indem für jede Position, d. h. jeden Punkt bzw. Pixel des Bewegungsvektorfelds, eine Abweichungsfläche ermittelt wird. Diese Abweichungsfläche enthält die möglichen Abweichungen eines auf dem Bewegungsvektor an der aktuellen Position basierenden Prädiktionsbildpunktes von einem Bildpunkt an der betreffenden Position im aktuellen Bildbereich bei einer Veränderung des Bewegungsvektors um eine definierte Variation um den aktuell betrachteten Bildpunkt, beispielsweise in einem Raum von 3 x 3 Pixel. Als ein Konfidenzwert kann dann jeweils in zumindest einer Richtung ein Krümmungswert dieser Abweichungsfläche ermittelt werden, d. h. es wird für jeden Punkt beispielsweise komponentenweise die zweiten Ableitung ermittelt und so entsprechend das Konfidenzvektorfeld komponentenweise aufgebaut.

Die Erfindung wird im Folgenden unter Hinweis auf die beigefügten Figuren anhand von Ausführungsbeispielen noch einmal näher erläutert. Es zeigen:

Figur 1 eine Bildsequenz mit vier zeitlich aufeinander folgenden Aufnahmen einer Schicht eines dynamischen kardiologischen computertomographischen Bilddatensatzes,

Figur 2 ein Flussdiagramm eines ersten Ausführungsbeispiels eines erfindungsgemäßen Kodierverfahrens,

Figur 3 eine Darstellung der x-Komponente eines rekonstruierten Bewegungsvektorfelds,

Figur 4 eine Darstellung der y-Komponente eines rekonstruierten Bewegungsvektorfelds,

Figur 5 ein Block-Schema eines ersten Ausführungsbeispiels einer erfindungsgemäßen Bildkodiervorrichtung,

Figur 6 ein Flussdiagramm eines ersten Ausführungsbeispiels eines erfindungsgemäßen Dekodierverfahrens,

Figur 7 ein Block-Schema eines ersten Ausführungsbeispiels einer erfindungsgemäßen Bilddekodiervorrichtung,

Figur 8 eine Darstellung der mittleren Restfehlerdatenmenge und der Gesamtinformationsmenge pro Frame in Abhängigkeit von der Bewegungsinformationsmenge,

Figur 9 eine Darstellung des mittleren quadratischen Fehlers (Mean Square Error = MSE) pro Frame in Abhängigkeit von der Bewegungsinformationsmenge,

Figur 10 eine Darstellung des dritten Bildes aus Figur 1 mit einem teilweise gezeigten überlagerten dichten Bewegungsvektorfeld,

Figur 11 eine Darstellung der Konfidenzwerte in x-Richtung des Bildes aus Figur 10,

Figur 12 eine Darstellung des dritten Bildes aus Figur 1 mit einem ausgedünnten Bewegungsvektorkomponentenfeld gemäß Figur 10,

Figur 13 eine Darstellung des dritten Bildes aus Figur 1 mit dem Überlagerten Bewegungsvektorfeld, welches auf Basis der Bewegungsvektoren gemäß Figur 12 rekonstruiert wurde,

Figur 14 eine Darstellung des vervierfachten Restfehlers in dem ersten erfindungsgemäßen Kodierverfahren,

Figur 15 eine Darstellung des vervierfachten Restfehlers in einem blockbasierten prädiktiven Kodierverfahren,

Figur 16 ein Flussdiagramm eines zweiten Ausführungsbeispiels eines erfindungsgemäßen Kodierverfahrens,

Figur 17 ein Flussdiagramm eines dritten Ausführungsbeispiels (hier eine Variante des zweiten Ausführungsbeispiel) eines erfindungsgemäßen Kodierverfahrens,

Figur 18 ein Block-Schema eines zweiten Ausführungsbeispiels einer erfindungsgemäßen Bildkodiervorrichtung,

Figur 19 ein Flussdiagramm eines zweiten Ausführungsbeispiels eines erfindungsgemäßen Dekodierverfahrens,

Figur 20 ein Block-Schema eines zweiten Ausführungsbeispiels einer erfindungsgemäßen Bilddekodiervorrichtung.

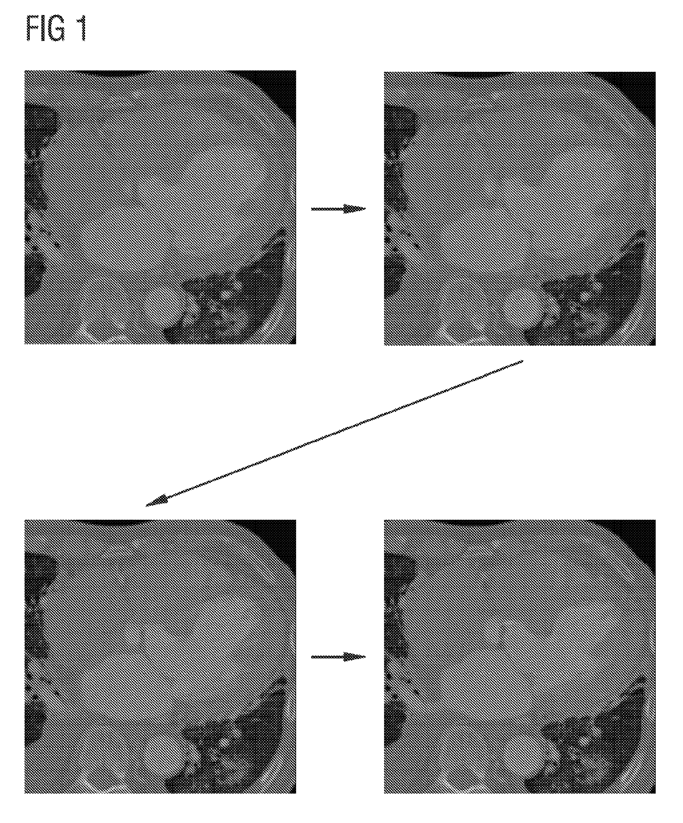

Figur 1 zeigt vier Bilder einer Bildsequenz, bestehend aus vier aufeinanderfolgenden Aufnahmen ein und derselben Schicht, die im Rahmen eines dynamischen kardiologischen Bilddatensatzes mittels eines Computertomographen aufgezeichnet wurden. Anhand dieser Bilder zeigt sich, dass die verschiedenen Objekte mit der Zeit in erster Linie eine Verformungsbewegung durchführen, anders als dies beispielsweise sonst in üblichen Videoaufnahmen der Fall ist. Im Folgenden wird davon ausgegangen, dass das erfindungsgemäße Verfahren in erster Linie zur Kompression solcher medizintechnischer Bilddaten verwendet wird, auch wenn das Verfahren nicht hierauf beschränkt ist. Des Weiteren wird im Folgenden der Einfachheit halber auch davon ausgegangen, dass immer komplette Bilder einer Bildsequenz kodiert bzw. dekodierte werden, wobei es jedoch, wie bereits oben beschrieben, auch möglich ist, nur bestimmte Bildbereiche eines Bilds zu kodieren und zu dekodieren.

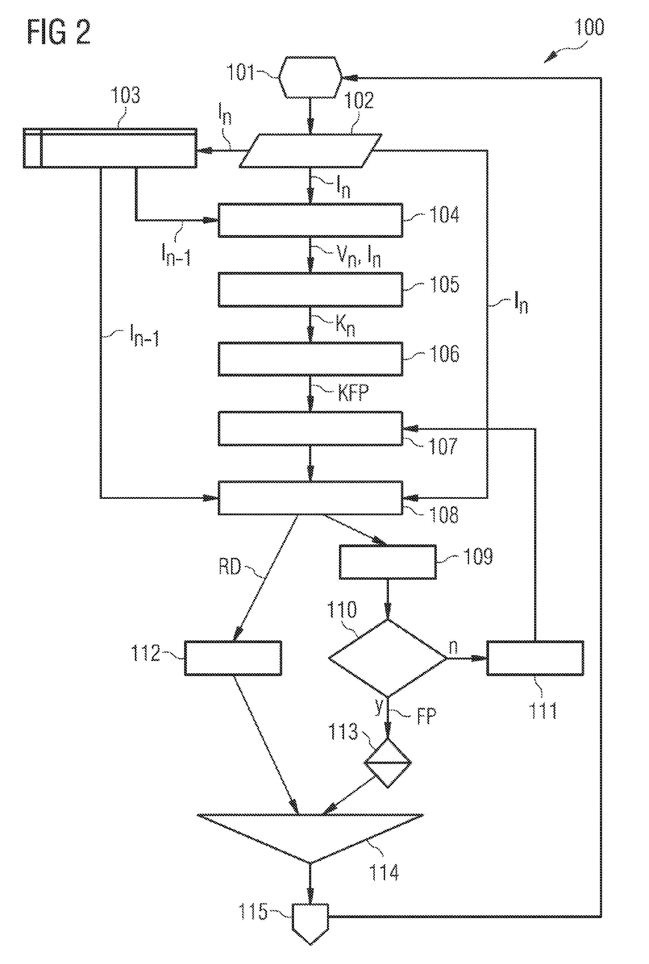

Anhand von Figur 2 wird nun eine erste Variante eines erfindungsgemäßen verlustfreien Kodierverfahrens 100 beschrieben. Dabei erfolgt die Beschreibung anhand eines Kodierungsdurchlaufs für ein Bild in der Bildsequenz, bei dem bereits ein vorheriges Bild gespeichert wurde. Für das erste Bild einer Bildsequenz kann dieses Verfahren dann so nicht angewendet werden, da hier ja ein Vergleichsbild fehlt, auf dessen Basis ein Prädiktionsbild bzw. ein Bewegungsvektorfeld erzeugt werden kann.

Das Verfahren zur Kodierung eines Bildes beginnt im Schritt 101 (als Startpunkt), wobei als erstes in einem Schritt 102 ein RAW-Bild $I_n$ eingelesen wird. Dieses wird dann einerseits in einem Schritt 103 für die nächste Iteration, d. h. die Bearbeitung des $I_{n+1}$ Bilds, gespeichert. Andererseits wird das Bild $I_n$ in einem Schritt 104 verwendet, um gemeinsam mit einem in dem vorherigen Kodierungsdurchlauf im Schritt 103 im Speicher hinterlegten vorhergehenden Bild $I_{n-1}$ ein dichtes Bewegungsvektorfeld $V_n$ zu ermitteln.

Die Verwendung eines solchen dichten Bewegungsvektorfelds $V_n$ hat insbesondere den Vorteil, dass bessere Anpassungen an beliebige Gewebebewegungen und somit bessere Vorhersagen möglich sind. Außerdem hat die Annahme einer "glatten" Bewegung weitere Vorteile, wie beispielsweise, dass darauf basierende Verfahren nicht auf blockbasierte Kompressionsverfahren beschränkt sind und bezüglich der Kodierung der Restfehlerdaten mit räumlichen Prädiktionsverfahren wie JPEG-LS oder Wavelet-Kompressionsverfahren in räumlicher und zeitlicher Richtung kombiniert werden können.

Zur Abschätzung bzw. Gewinnung des dichten Bewegungsvektorfelds kann eine korrelationsbasierte optische Flussmethode verwendet werden, wie sie beispielsweise in ähnlicher Form in P. Anandan, "A Computational Framework and an Algorithmen for the Measurement of Visual Motion", Int. Journal of Computer Vision, 2(3), pp. 283-310, Jan. 1989, beschrieben wird. Der dort verwendete Algorithmus zielt darauf ab, eine gewichtete Linearkombination der Summe der quadratischen Intensitätsdifferenzen (Squared Intensity Differences = SSD) einer Nachbarschaft um einen bewegten Bildpunkt und der Unterschiede benachbarter Bewegungsvektoren zu minimieren. Hierzu werden sowohl das aktuelle als auch das vorhergehende Bild mehrfach um einen Faktor zwei in jeder Dimension (d.h. in x- und y-Richtung, also insgesamt um einen Faktor vier) in ihrer Bildgröße herunterskaliert, bis eine Größe erreicht ist, in der die Bewegung maximal einen Pixel ausmachen kann. Nach der Bewegungsschätzung wird dann das Vektorfeld sowohl bezüglich der Auflösung als auch bezüglich der Vektorlänge unter Nutzung eines, vorzugsweise bilinearen, Interpolationsverfahrens jeweils um einen Faktor zwei hierarchisch heraufskaliert, bis schließlich die Originalbildgröße der ursprünglichen Bilder wieder erreicht ist. In jeder Stufe wird dabei die Abschätzung mittels eines iterativen Algorithmus verbessert, bei dem eine 5x5-Pixel-Nachbarschaft an jeder Position $\mathbf{x}$ im aktuellen Bild $I_n$ mit neun Kandidaten-Positionen (Kandidaten-Bewegungsvektoren) $\mathbf{v}$ im vorherigen Bild $I_{n-1}$ verglichen wird. Die Kandidaten-Positionen $\mathbf{v}$ liegen dabei innerhalb eines Suchbereichs von nur einem Pixel, d. h. in einer 8-Pixel-Nachbarschaft, um die Position, auf die die vorhergehende Vektorabschätzung $\mathbf{v}_{n-1}$ zeigt. Dies lässt sich mit folgender Gleichung beschreiben:

$$\mathbf{v}_t(\mathbf{x}) = \underset{\mathbf{v} \in N_{3x3}(\mathbf{v}_{t-1}(\mathbf{x}))}{\arg\min} \left( \sum_{\mathbf{r} \in N_{5x5}(\mathbf{x})} \left( I_n(\mathbf{r}) - I_{n-1}(\mathbf{r} + \mathbf{v}) \right)^2 \right.$$

$$\left. + \lambda \left| \mathbf{v} - \frac{1}{8} \sum_{\mathbf{l} \in N_{3x3}(\mathbf{x}) - \{\mathbf{x}\}} \mathbf{v}_{t-1}(\mathbf{l}) \right| \right) \qquad (1)$$

In dieser Gleichung minimiert der erste Summenterm die Intensitätsdifferenzen und der zweite Term mit der Summenvariablen 1 (bei dem die Summe über alle 1 in einer 3x3-Umgebung um den Punkt $\mathbf{x}$ mit Ausnahme des Punkts $\mathbf{x}$ selber läuft) minimiert die Differenzen zwischen der jeweiligen Kandidaten-Positionen $\mathbf{v}$ und den acht Nachbarn. t ist in Gleichung (1) der Iterationsindex. In Gleichung (1) wird, wie auch ansonsten im Folgenden, davon ausgegangen, dass der Verschiebungsvektor (d.h. der Bewegungsvektor) $\mathbf{v}$ in einer Form gespeichert wird, dass er für einen Pixel im aktuellen Bild angibt, von welcher Stelle im vorhergehenden Bild aus dieses verschoben wurde. Dementsprechend ist **r** in Gleichung (1) eine Position des 5x5-Feld um eine Position **x,** die zum Vergleich der Intensitätswerte beiträgt und **v** ist eine der neun Suchpositionen im vorherigen Bild bei einer Pixelverschiebung in allen Richtungen. Der Gewichtungsparameter $\lambda$ wird heuristisch gewählt und hängt davon ab, in welcher Form die Intensitäten gespeichert werden. Wird beispielsweise eine Intensität zwischen 0 und 1 gespeichert kann ein Gewichtungsparameter $\lambda$ von beispielsweise $10^{-3}$ gewählt werden. Entscheidend ist, dass in etwa der erste Term und der zweite Term der Gleichung (1) in der gleichen Größenordnung liegen.

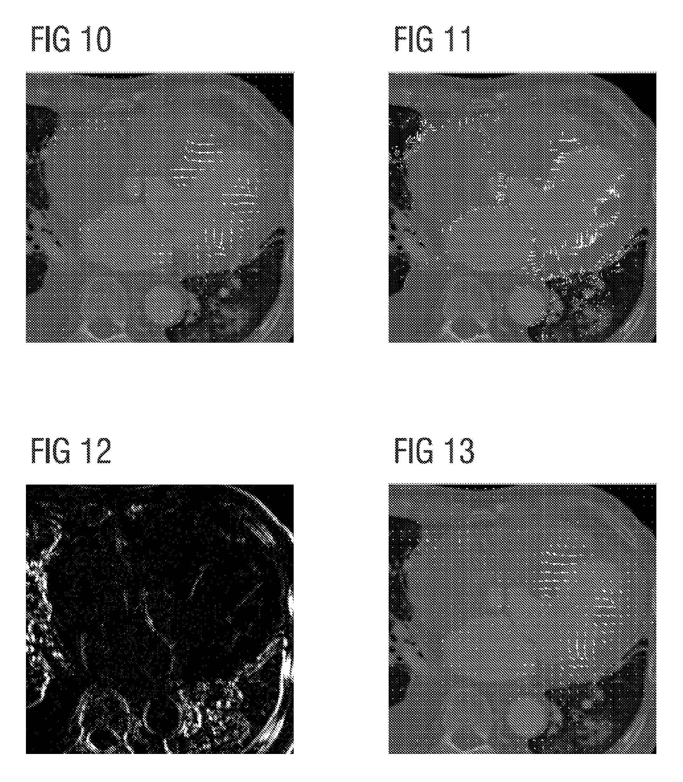

Üblicherweise reicht es aus, in jeder Stufe um die 2 bis 10 Iterationen durchzuführen, um eine sehr gute Approximation der Bewegung zu erhalten. Bei einem existierenden Test-Ausführungsbeispiel des Verfahrens wurde bereits ein 512x512 Pixel- bzw. Voxel-Vektorfeld mit zehn Iterationen pro Stufe in weniger als zwei Sekunden auf einer herkömmlichen 2,8 GHz CPU erstellt, wobei hierzu ein einfaches C-Programm verwendet wurde. Bei einer Verwendung eines speziell hierfür vorgesehenen Bausteins, beispielsweise ASICs, lassen sich noch erhebliche Beschleunigungen erreichen. Ein mit diesem Verfahren berechnetes Bewegungsvektorfeld für das dritte Bild der Sequenz aus Figur 1 ist in Figur 10 gezeigt. Aus Gründen der besseren Darstellbarkeit in der Figur erfolgte zur Erstellung des Bildes jedoch ein Downsampling des ursprünglichen dichten Bewegungsvektorfelds.

Es wird ausdrücklich darauf hingewiesen, dass anstelle des zuvor konkret beschriebenen Verfahrens zur Ermittlung eines dichten Bewegungsvektorfelds im Rahmen der Erfindung aber auch ein anderes geeignetes Verfahren verwendet werden kann. Um in relativ verrauschtem Bilddaten weitere Verbesserungen des Verfahrens zu erreichen, können die eventuell bei einer pixelweisen Bewegungsschätzung auftretenden hochfrequente Variationen zwischen den Pixeln durch zusätzliche Inloop-Rauschreduzierungs-Filterverfahren reduziert werden, z. B. mit einem kleinen Gauß'schen Kernel oder kantenerhaltenden Methoden.

Basierend auf dem Bewegungsvektorfeld $V_n$ sowie dem aktuellen Bild $I_n$ erfolgt dann im Schritt 105 gemäß Figur 2 eine Ermittelung eines Konfidenzvektorfelds $K_n$ für das aktuelle Bild $I_n$. Dieses Konfidenzvektorfeld $K_n$ beschreibt die Zuverlässigkeit in der Vorhersage der zeitlichen Bewegung der einzelnen Pixeldaten auf Basis des dichten Bewegungsvektorfelds $V_n$.

Eine Möglichkeit, Konfidenzwerte für jeden der Bewegungsvektoren zu bestimmen, wird im Folgenden beschrieben, wobei es sich auch hierbei wieder nur um eine bevorzugte Variante handelt und auch andere Verfahren zur Ermittlung von Konfidenzwerten möglich sind.

Dieses Verfahren basiert auf einer etwas veränderten Variante eines in der o. g. Veröffentlichung von P. Anandan beschriebenen Verfahrens. Hierbei werden im Rahmen des oben beschriebenen Verfahrens - in gleicher Weise wie bei einer weiteren Iteration für eine Bewegungsschätzungsverbesserung zur Ermittlung des Bewegungsvektorfelds - jeweils in der höchsten Auflösungsstufe noch einmal die SSD-Werte in einer 3x3-Suchumgebung um den geschätzten optimalen Verschiebungsvektor ermittelt. Das heißt, es wird für jeden Vektor eine eigene 3x3 Pixel große SSD-Oberfläche ermittelt. Auf Basis der Krümmung dieser SSD-Oberflächen können dann zwei Konfidenzwerte in x und y berechnet werden. Hierzu kann einfach die zweiten Ableitung dieser Oberflächenfunktion berechnet werden, was sich beispielsweise in Matrixschreibweise wie folgt darstellen lässt:

$$k_x = \mathbf{w}^T \mathbf{S} \mathbf{d} \quad k_y = \mathbf{d}^T \mathbf{S} \mathbf{w}, \quad \text{mit} \quad \mathbf{d} = \begin{bmatrix} 1 \\ -2 \\ 1 \end{bmatrix}, \quad \mathbf{w} = \begin{bmatrix} 1 \\ 2 \\ 1 \end{bmatrix} \quad (2)$$

Hierbei ist **S** die 3x3-SSD-Matrix und $k_x$, $k_y$ sind die Konfidenswerte in x- und y-Richtung. Wird beispielsweise ein Pixel in einer homogenen Bildregion betrachtet, so sind alle Einträge in der Matrix **S** ähnlich. In diesem Fall sind die Konfidenzwerte $k_x$, $k_y$ der beiden geschätzten Vektorkomponenten nur gering. Befindet sich der Pixel an einer vertikalen (in y-Richtung verlaufenden) Intensitätsgrenze, so steigt der SSD-Wert an, wenn die Suchposition in x-Richtung verändert wird. Daher hat die Matrix **S** einen höheren Wert in ihrer linken und rechten Spalte, so dass der Konfidenzwert $k_x$ in x-Richtung groß ist. In ähnlicher Weise würde ein großer Konfidenzwert $k_y$ in y-Richtung auftreten, wenn der Pixel sich an einer horizontalen, in x-Richtung verlaufenden Intensitätsgrenze befindet. Figur 11 zeigt ein Beispiel für die Konfidenzwerte $k_x$ in x-Richtung der Bewegungsvektoren aus Figur 10. Die hellen Regionen zeigen eine hohe Zuverlässigkeit der Bewegungsvektoren, da es sich hierbei um vertikale Kanten handelt.

Da in vielen Regionen die Bewegungsvektoren insgesamt oder zumindest eine der Komponenten des Bewegungsvektors relativ unzuverlässig ist, bräuchten im Prinzip diese Vektoren für eine gute Vorhersage nicht verwendet werden. Es ist daher ausreichend, nur die zuverlässigen Bewegungsvektorkomponenten in der weiteren Verarbeitung, d. h. für die Kompression der Daten, zu nutzen und nur diese zu übertragen bzw. zu speichern. Die anderen Bewegungsvektoren können dann im Rahmen einer Rekonstruktion des dichten Bewegungsvektorfelds wieder extrapoliert bzw. interpoliert werden, was insbesondere bei medizintechnischen Bildern aufgrund der zusammenhängenden Natur des Gewebes ohne einen großen Restfehler möglich ist.

Bei dem ersten erfindungsgemäßen Verfahren werden daher basierend auf dem Konfidenzvektorfeld bzw. den Vektorkomponentenfeldern für die x- und y-Richtung jeweils Merkmalspunkte ermittelt, welche für die Bewegung tatsächlich relevant sind, d. h. an denen der Bewegungsvektor mit einer hohen Zuverlässigkeit ermittelt werden konnte. Hierbei wird sozusagen ein ausgedünntes dichtes Bewegungsvektorfeld erzeugt, auf deren Basis sich wieder ein vollständiges dichtes Bewegungsvektorfeld rekonstruieren lässt. Dazu werden Bewegungsvektorkomponenten nur an den wichtigen Positionen (den sogenannten relevanten Merkmalspunkten) gespeichert.

Da wie zuvor erläutert die Konfidenzwerte für die beiden Komponenten eines Bewegungsvektors völlig unterschiedlich sein können, ist es sinnvoll, die Ermittlung der Merkmalspunkte auch komponentenweise, d.h. für jede Vektorkomponente separat, durchzuführen. Ein Merkmalspunkt FP wird daher im Folgenden als ein Tripel FP= (m,n,k) gesehen, wobei (m,n) die Position eines solchen relevanten Bewegungsvektors, d. h. des Merkmalspunkts FP, darstellt und k der Konfidenzwert der wichtigen Komponente des Bewegungsvektors.

Um die relevanten Merkmalspunkte zu finden, werden zunächst in einem Schritt 106 auf Basis des Konfidenzvektorfelds Kandidaten-Merkmalspunkte KFP ermittelt (siehe wieder Figur 2).

Dies kann beispielsweise durch Ermittlung der lokalen Maxima in einem Konfidenzvektorfeld bzw. bevorzugt einem Konfidenzvektorkomponentenfeld (wie es beispielsweise für die x-Komponente in Figur 11 dargestellt wurde) ermittelt werden. Hierzu kann ein beliebiges Extremwertsuchverfahren verwendet werden.

Ein Positionswert kann dabei als lokales Maximum angesehen werden, wenn er den höchsten Konfidenzwert innerhalb einer lokalen Umgebung aufweist. Die Größe dieser Umgebung spezifiziert die minimale Distanz der lokalen Maxima zueinander und gibt daher auch die ungefähre Gesamtanzahl der zunächst selektierten Kandidaten-Merkmalspunkte vor. Bei der Wahl dieser Größe muss daher zwischen der Komplexität einer evtl. nachfolgenden weiteren Auswahl von relevanten Merkmalen aus den Kandidaten-Merkmalspunkten und einem möglichen Verlust von tatsächlich wichtigen Vektorinformationen abgewägt werden. In experimentellen Versuchen hat sich herausgestellt, dass eine Nachbarschaft zwischen 3x3 Pixeln und 5x5 Pixeln gut geeignet ist. Zudem können in rauschstarken Bereichen zur Reduzierung der Detektion von ungünstigen Maxima nur solche Maxima mit einer Größe oberhalb eines bestimmten Schwellenwerts als Kandidaten-Merkmalspunkte akzeptiert werden. Der genaue Wert für einen solchen Schwellenwert hängt vom Intensitätsbereich des aktuell vorliegenden Bildrauschens ab. Ein Wert von 5 % bis 10 % des maximalen Konfidenzwerts gibt in der Regel gute Ergebnisse.

Zusätzlich kann auch für Regionen mit einer hohen Dichte von Maxima bzw. mit einer hohen Dichte von Bewegungsvektoren mit einer hohen Zuverlässigkeit und ähnlichen Bewegungsinformationen ein gemeinsamer repräsentativer Vektor für eine Gruppe von Bewegungsvektoren gewonnen werden. Hierzu können z. B. die einzelnen Komponenten der Bewegungsvektoren gemittelt werden und an der Position im Zentrum wird ein gemittelte Bewegungsvektor angenommen. Entsprechend ist eine solche Mittelung von benachbarten Gruppen von Bewegungsvektorkomponenten auch möglich, wenn wie zuvor beschrieben mit separaten Vektorkomponentenfeldern für die x-Richtung und y-Richtung gearbeitet wird.

Im Weiteren wird dann aus diesen Kandidaten-Merkmalspunkten KFP eine Anzahl von relevanten Merkmalspunkten FP ausgewählt. Dieser Merkmalspunkt-Ausleseprozess läuft gemäß dem Verfahren nach Figur 2 iterativ über mehrere Schritte 107, 108, 109, 110, 111. Dabei erfolgt hier die Auslese der relevanten Merkmalspunkte FP aus den Kandidaten-Merkmalspunkten KFP basierend auf einem durch diese Merkmalspunkte bzw. deren Bewegungsvektorkomponenten resultierenden Restfehler.

Hierzu wird zunächst im Schritt 107 auf Basis der Kandidaten-Merkmalspunkte KFP eine nicht-lineare Bewegungsvektorfeld-Rekonstruktion durchgeführt. Dabei werden die Bewegungsvektorkomponenten an den Kandidaten-Merkmalspunkten als Stützstellen verwendet, um hieran eine Fläche anzupassen, durch die dann die Bewegungsvektorkomponenten an den restlichen Positionen extrapoliert bzw. interpoliert werden.

Um dabei auf Basis dieses ausgedünnten Bewegungsvektorfelds eine möglichst gute Annäherung an das Original-Bewegungsvektorfeld zu erhalten, sollten vorzugsweise einige zusätzliche Voraussetzungen beachtet werden. Zum einen sollte die relevante Bewegungsvektorkomponente an den relevanten Merkmalspunkten selber exakt reproduziert werden, da für diese Vektorkomponente ja eine hohe Konfidenz vorliegt. Des Weiteren sollte berücksichtigt werden, dass Bewegungsvektoren in der Nähe von relevanten Merkmalspositionen aufgrund des untereinander verbundenen Gewebes ähnliche Vektorkomponenten aufweisen sollten, wogegen der Einfluss von weiter entfernten Bewegungsinformationen eher sehr gering sein sollte.

Weit entfernt von relevanten Merkmalspunkten sollten die Vektoren kurz sein, da das Gewebes lokale Bewegungen abschwächt und es daher in der Regel keine globale Bewegung gibt . Es kann vorzugsweise weiterhin darauf geachtet werden, dass lange Bewertungsvektoren an relevanten Merkmalspunkten größere Umgebungen beeinflussen, als kürzere Vektoren, ebenso aufgrund der Tatsache, dass es sich ja um untereinander verbundenes Gewebe handelt.

Werden beide Vektorkomponenten unabhängig behandelt, können all diese Kriterien bei der Extrapolation bzw. Interpolation der Bewegungsvektorkomponenten relativ gut durch eine gewichtete nicht-lineare Superposition von 2D-Gaußfunktionen realisiert werden. Hierbei werden bevorzugt gaußglockenförmige Basisfunktionen über jede Stützstelle (d. h. jede relevante Vektorkomponente) gelegt und diese so gewichtet, dass das maximale Gewicht an der eigenen Stützstelle vorliegt und ein Gewicht der Größenordnung Null an fremden Stützstellen. So kann einfach sichergestellt werden, dass an allen Stützstellen der Originalwert erhalten bleibt. Mathematisch lässt sich diese Rekonstruktion des Vektorfelds $\mathbf{V}$ = ($v_x(m,n)$, $v_y(m,n)$) für die x-Komponente (eine nicht dargestellte, analoge Gleichung gibt es für die y-Komponente) durch die Gleichung

$$v_x(m,n) = \left( \sum_{f=1}^{F_x} d_f^{-4} \right)^{-1} \cdot \sum_{f=1}^{F_x} \frac{c_{f,x}}{d_f^4} \exp\left( -\frac{d_f^2}{\left(\sigma c_{f,x}\right)^2} \right) \tag{3}$$

darstellen. Dabei ist $d_f^2 = (m-m_{f,x})^2+(n-n_{f,x})^2$ der quadratische Abstand von der jeweiligen Stützstelle f, $c_{f,x}$ ist die Breite der Gauß-Funktion und $v_x(m,n)$ ist die Bewegungsvektorkomponente in x-Richtung am Ort (m,n). Gauß-Funktionen sind insofern besonders geeignet für diese Aufgabe, da sie hohe Wert nah ihrem Maximum annehmen, aber einen sehr schnellen und glatten Abfall nach außen hin haben. Für jeden der $F_x$ relevanten Merkmalspunkte kann also eine Gauß-Funktion addiert werden mit ihrem Maximum an der jeweiligen Fierkmalsposition ($m_{f,x}$, $n_{f,x}$), wobei die Breite proportional und die Höhe gleich der Vektorkomponente $c_{f,x}$ ist. Um das Kriterium einer exakten Interpolation an einem Zentrum jeder Gauß-Funktion zu erhalten und den Einfluss von entfernten Vektoren zu reduzieren, wenn die Merkmalspunkte etwas näher zueinander liegen, wird zudem eine $d^{-4}$—Gewichtsfunktion (mit dem o. g. Abstand d) in jeder Gauß-Funktion benutzt. Schließlich werden die Vektorkomponenten auf die Summe aller Gewichtungsfunktionen an der Vektorposition normalisiert. Es ist zu beachten, dass der Parameter σ von der Festigkeit des Gewebes abhängig gewählt werden kann, auch wenn er in einem großen Bereich (einschließlich unendlich) gewählt werden kann, ohne dass es einen großen Einfluss auf das Rekonstruktionsergebnis hat.

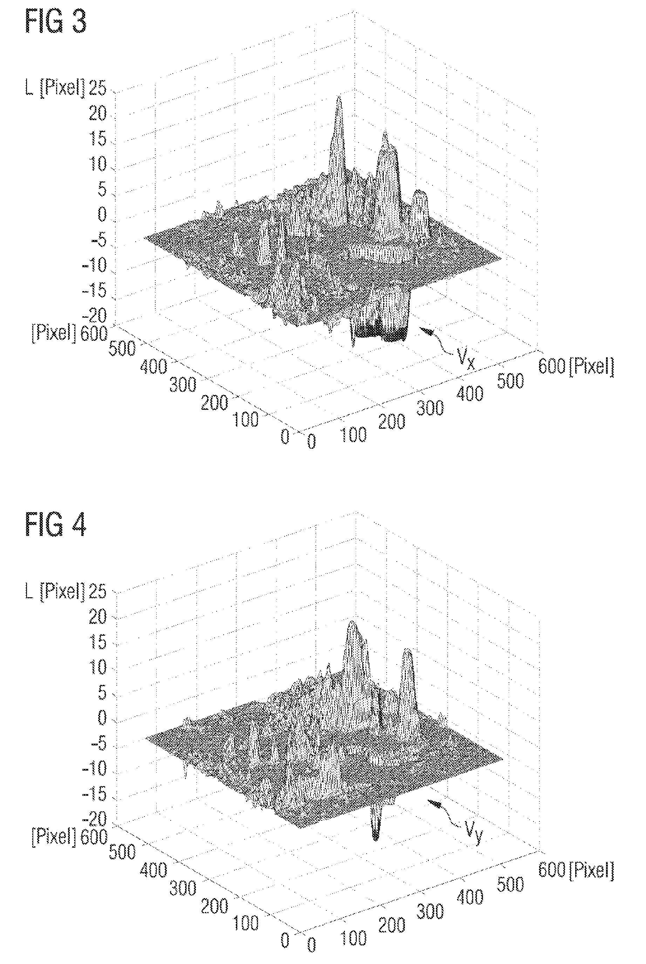

Beispiele für Bewegungsvektorkomponentenfelder $V_x$ für die x-Komponente und $V_y$ für die y-Komponente eines Bewegungsvektorfelds sind in den Figuren 3 und 4 dargestellt. Dabei ist über der Grundfläche mit 512x512 Pixeln in x- und y-Richtung für ein Bild jeweils die Länge L der Bewegungsvektoren (auch in Pixels) in x-Richtung (Figur 3) bzw. in y-Richtung (Figur 4) dargestellt. Hierbei gibt es entsprechend der tatsächlichen Bewegung Vektorkomponenten, die in positiver Richtung verlaufen, und Vektorkomponenten, die in negativer Richtung verlaufen.

Insbesondere wenn es sich nicht um medizinische Bilddaten oder andere Bilder handelt, bei denen in erster Linie Deformierungen vorkommen, können auch andere Basisfunktionen zur Rekonstruktion gewählt werden. Beispielsweise können, wenn eine Segmentierung von Bewegungen in einem vorhergehenden Bild einer Kameraaufnahme möglich sind, wie z. B. bei einem sich im Vordergrund bewegendes Objekt vor einem Hintergrund, die Basisfunktionen so gewählt werden, dass sie nur die Merkmalspunkt-Vektorkomponenten in der bewegten Region extrapolieren. Werden Basisfunktionen mit einem konstanten Wert ungleich Null nur innerhalb einer quadratischen Region benutzt und eine geeignete Bewegungsvektorfeld-Schätzung verwendet, ähnelt diese Methode dann einem blockbasierten Kompensationsschema, jedoch mit einer Optimierung der Blockpositionen.

In einem Schritt 108 wird dann basierend auf dem in Schritt 107 rekonstruierten dichten Bewegungsvektorfeld auf Basis des vorherigen Bilds $I_{n-1}$ ein Vorhersagebild (Prädiktionsbild) für das aktuelle Bild erzeugt und von dem aktuellen Bild $I_n$ subtrahiert. Im Schritt 109 wird dann der mittlere quadratische Fehler MSE berechnet und im Schritt 110 wird geprüft, ob dieser mittlere quadratische Fehler MSE größer als ein maximal zulässiger Fehler $MSE_{Max}$ ist.

Ist dies nicht der Fall (Abzweig "n"), wird im Schritt 111 ein Kandidaten-Merkmalspunkt weggelassen. Die Auswahl, welcher Kandidaten-Merkmalspunkt zuerst weggelassen wird, erfolgt in Abhängigkeit davon, welche Auswirkungen das Weglassen dieses Kandidaten-Merkmalspunkts auf den MSE hat. D.H. es wird in diesem Schritt 111 (in einer nicht dargestellten Schleife) für jeden der Kandidaten-Merkmalspunkte ohne den betreffenden Kandidaten-Merkmalspunkt erneut im Rahmen eines nicht-linearen Rekonstruktionsverfahrens (wie im Schritt 107) ein dichtes Bewegungsvektorfeld rekonstruiert, dann ein weiteres Prädiktionsbild erzeugt und die Differenz zum aktuellen Bild erzeugt und hierfür die mittlere quadratische Abweichung MSE ermittelt. Der "unwichtigste" Kandidaten-Merkmalspunkt wird dann weggelassen. Mit den verbleibenden Kandidaten-Merkmalspunkten wird dann im Schritt 107 ein dichtes Bewegungsvektorfeld rekonstruiert, im Schritt 108 ein weiteres Prädiktionsbild erzeugt und im Schritt 109 die Differenz zum aktuellen Bild erzeugt und hierfür die mittlere quadratische Abweichung MSE ermittelt. Im Schritt 110 wird schließlich wieder geprüft, ob der mittlere quadratische Fehler MSE immer noch nicht über dem maximal zulässigen Fehler $MSE_{Max}$ ist, und, falls dies der Fall ist, dann in einem weiteren Schleifendurchlauf im Schritt 111 ein neuer "unwichtigster" Kandidaten-Merkmalspunkt gesucht.

Liegt dagegen der mittlere quadratische Fehler MSE erstmals über dem maximal zulässigen Fehler $MSE_{Max}$ (Abzweig "y" am Schritt 110), so wird die die Auswahl abgebrochen, da kein weiterer "verzichtbarer" Kandidaten-Merkmalspunkt mehr vorliegt. Die verbleibenden Kandidaten-Merkmalspunkte sind dann die relevanten Merkmalspunkte FP.

Es ist klar, dass bei diesem Abbruchkriterium tatsächlich mit einer Anzahl von relevanten Merkmalspunkten gearbeitet wird, bei denen der maximal zulässigen Fehler $MSE_{Max}$ knapp überschritten wird. Da es sich hierbei aber um einen frei festlegbaren Schwellenwert handelt, kann dies bei der Bestimmung des Schwellenwerts bereits berücksichtigt werden.

Es ist zu beachten, dass bei einer optimalen Auslese jede mögliche Kombination von Merkmalspunkten für eine gewünschten Anzahl n von Merkmalspunkte geprüft werden muss, d. h. es gibt $\binom{N}{n}$ solcher Prüfungen, wobei N die Anzahl der Kandidaten-Merkmalspunkte ist. Um die Komplexität zu reduzieren, kann aber eine Auslesestrategie gewählt werden, bei der unabhängig für jeden Merkmalspunkt geprüft wird, wie sich der MSE verändert, wenn dieser Merkmalspunkte entfernt wird. Auf diese Weise kann nach und nach die Anzahl der Merkmalspunkte reduziert werden, bis schließlich eine gewünschte Anzahl von Merkmalspunkten oder ein maximales MSE erreicht wird. Mit diesem Verfahren kann die Anzahl der Prüfungen auf $0,5 \cdot N \cdot (n + 1)$ reduziert werden. Nach der Merkmalspunkt-Auswahl werden für jede Merkmalsposition wie erwähnt die Position und die relevante Komponente $k_x$ oder $k_y$ des Bewegungsvektors an dieser Position übermittelt bzw. gespeichert, wogegen jeweils die andere Vektorkomponente auch eines relevanten Merkmalspunkts aus anderen verlässlicheren Positionen geschätzt werden können. Figur 12 zeigt als Beispiel einen Satz von 1170 Merkmalspunkten, die aus dem dichten Bewegungsvektorfeld gemäß Figur 10 ermittelt wurden.

Für eine mögliche verlustlos Bilddatenkompression kann das rekonstruierte Vektorfeld genutzt werden, um eine Vorhersage des aktuellen Bilds, das Prädiktionsbild, zu ermitteln. Dabei wird jeder Pixel aus dem entsprechenden Intensitätswert des vorhergehenden Bilds mit Hilfe des Bewegungsvektors vorhergesagt. Nach einer Subtraktion des Prädiktionsbilds von den realen Bilddaten müssen nur noch die Restfehlerdaten RD übermittelt werden. Um insbesondere in Regionen mit hohem Kontrast bei einer gewünschten Genauigkeit der Bewegungskompensation für jeden einzelnen Pixel eventuelle Probleme in den Vorhersagen und dementsprechend in den Restfehlern aufgrund hochfrequenten Rauschens zu reduzieren, kann optional ein einfaches Oversampling des Bewegungsvektorfelds mit einem Faktor von zwei durchgeführt werden. Figur 13 zeigt eine Bewegungsvektorfeld-Rekonstruktion mit einer entsprechend kompensierten Vorhersage. Ein Vergleich mit Figur 10 zeigt, dass diese nahezu dem ursprünglichen tatsächlichen Bewegungsvektorfelds entspricht.

Zur Ermittelung der zu übertragenden Restfehlerdaten wird in einem letzten Durchlauf noch einmal mit den tatsächlich relevanten Merkmalspunkten das aktuelle Prädiktionsbild erzeugt und vom aktuellen Bild abgezogen. Die dabei erhaltenen Restfehlerdaten RD werden dann in einem Intra-Kodierverfahren 112 (d.h. unabhängig von anderen Bildern) auf übliche Weise kodiert. Hierbei können alle bekannten Bild- bzw. Intrabild-Kompressionsalgorithmen wie Wavelet-Kodierverfahren (JPEG 2000) oder kontext-adaptive arithmetische Kodierverfahren wie JPEG-LS oder H. 264/AVC sowohl in verlustbehafteten als auch verlustfreien Methoden verwendet werden, je nachdem, was für die jeweilige Anwendung sinnvoll ist. In Regionen, in denen der Restfehler unter einer bestimmten Schwelle ist, kann auf die Übermittlung oder Speicherung des Restfehlers sogar ganz verzichtet werden. Prinzipiell können die Bewegungsinformationen, d. h. Bewegungsvektorfeld-Rekonstruktionsparameter, auch ohne explizite Übermittlung des Restfehlers verwendet werden, z.B. bei Nutzung von bewegungskompensierten zeitlichen Filterungsverfahren.

Sofern eine verlustlose Kompression der Daten gewünscht ist, kann vorzugsweise auch die Auswahlprozedur der relevanten Merkmalspositionen solange fortgesetzt werden, bis die kombinierte Informationsmenge an Bewegungsvektorinformationen und an Restfehlerinformationen (bei einer vorgegebenen Restfehler-Kodierungsmethode) ein Minimum erreicht. Eine weitere Möglichkeit zur Optimierung besteht darin, zusätzlich auch benachbarte Positionen sowie ähnliche Vektorkomponenten *zu* den Merkmalspunkten (ähnlich wie in dem Merkmalspunkt-Auswahlverfahren) hinsichtlich ihrer Auswirkung auf die Vorhersage zu prüfen, wenn die erste Auswahl von Kandidaten-Merkmalspunkten nicht ganz optimal ist. Wenn so eine bessere Vorhersage erreicht werden kann, kann entweder die Position des Merkmalspunkts oder die Vektorkomponente modifiziert werden.

Die relevanten Merkmalspunkte bzw. die hierzu gehörigen Positionsdaten und Vektorkomponenten können in einem Entropiekodierungsverfahren kodiert werden und in einem Multiplexverfahren mit den intra-kodierten Restfehlerdaten kombiniert werden, was im Schritt 114 erfolgt. Im Schritt 115 werden dann die Daten für das aktuelle Bild versenden und es beginnt die Kodierung eines neuen Bilds der Bildsequenz im Schritt 101.

Optional können die relevanten Merkmalspunkte in einem Schritt 113 vor der Entropiekodierung noch sortiert werden. Im Prinzip ist die Reihenfolge, in der die Merkmalspunkte übertragen bzw. gespeichert werden, aber nicht besonders relevant. Daher kann ein beliebiger Algorithmus verwendet werden, ausgehend von einer einfachen "Runlevel"-Kodierung bis hin zur Berechnung einer optimalen Route, beispielsweise mit einem "Travelling-Salesman"-Algorithmus. Eine solche optimierte Sortierung kann den Vorteil haben, dass mit einem differenziellen Entropie-Kodierungsverfahren der Positionen und Bewegungsvektorkomponenten die räumliche Korrelation bei beiden minimiert und somit die Redundanzen noch weiter reduziert werden können.

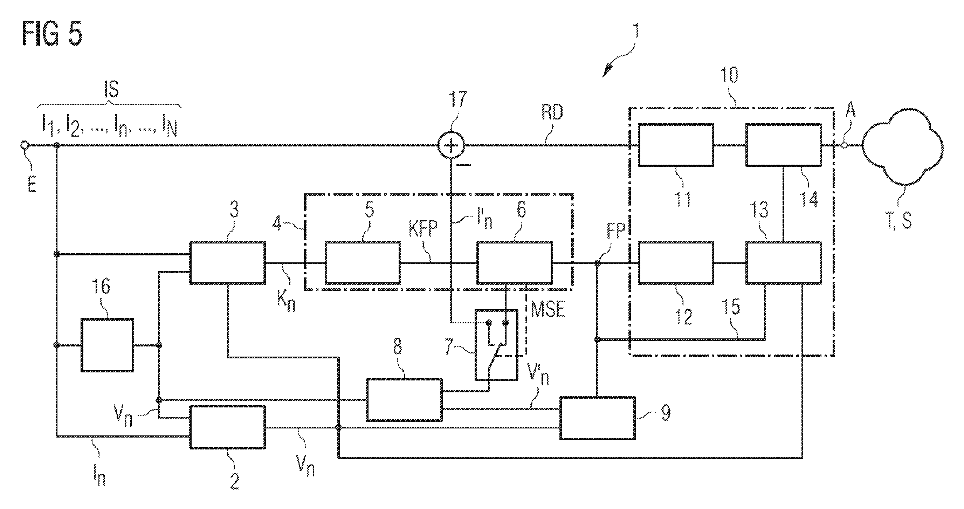

Figur 5 zeigt eine grob schematische Blockdarstellung eines möglichen Aufbaus einer Kodiervorrichtung 1 zur Durchführung eines Kodierverfahrens, wie es anhand von Figur 2 beschrieben wurde.

An einem Eingang E erfolgt hier eine Übernahme der Bilddaten, d. h. einer Bildsequenz IS, mit einer Vielzahl von Bildern $I_1$, $I_2$,..., $I_n$, ..., $I_N$. Die einzelnen Bilder werden dann an einen Pufferspeicher 16, in dem jeweils das aktuelle Bild für die spätere Kodierung des nachfolgenden Bilds gespeichert wird, und an eine Bewegungsvektorfeld- Ermittlungseinheit 2 übergeben, in der beispielsweise mit dem oben beschriebenen optischen Flussverfahren ein dichtes Bewegungsvektorfeld $V_n$ ermittelt wird.

Parallel wird in einer Konfidenzvektorfeld-Ermittlungseinheit 3 auf Basis des von der Bewegungsvektorfeld-Ermittlungseinheit 2 ermittelten dichten Bewegungsvektorfelds Von sowie auf Basis des aktuellen Bilds $I_n$ und des vorhergehenden Bilds $I_{n-1}$, welches aus dem Speicher 16 entnommen wird, ein aktuelles Konfidenzvektorfeld $K_n$ bzw. zwei Konfidenzvektorkomponentenfelder für die x- und y-Richtung ermittelt.

Diese Daten werden an eine Rekonstruktionsparameter-Ermittlungseinheit 4 weitergegeben, welche hier aus einer Maximum-Detektionseinheit 5 und einer Merkmalspunkt-Auswahleinheit 6 aufgebaut ist. Die Maxima-Detektionseinheit 5 ermittelt zunächst wie oben beschrieben die Kandidaten-Merkmalspunkte KFP und die Merkmalspunkt-Auswahleinheit 6 ermittelt dann aus den Kandidaten-Merkmalspunkten KFP die tatsächlich relevanten Merkmalspunkte FP. Die Merkmalspunkt-Auswahleinheit 6 arbeitet hierzu mit einer Bewegungsvektorfeld-Rekonstruktionseinheit 9 zusammen, die auf Basis der aktuellen relevanten Merkmalspunkte ein Bewegungsvektorfeld $V'_n$ entsprechend Schritt 107 des Verfahrens gemäß Figur 2 rekonstruiert und dieses an eine Prädiktionsbild-Generierungseinheit 8 liefert, welche den Verfahrensschritt gemäß 108 ausführt und ein aktuelles Prädiktionsbild (Vorhersagebild) $I'_n$ ermittelt. Zusätzlich kann in dieser Prädiktionsbild-Generierungseinheit 8 das Vorhersagebild $I'_n$ auch entrauscht werden.

Dieses Prädiktionsbild $I'_n$ wird dann wieder an die Merkmalspunkt-Auswahleinheit 6 zurückgeliefert, die in Abhängigkeit von dem Mean Squared Error MSE entscheidet, ob weitere Kandidaten-Merkmalspunkte KFP entfernt werden oder ob alle relevanten Merkmalspunkte FP gefunden wurden. Dies ist hier durch einen Schalter 7 symbolisiert. Sind die passenden relevanten Merkmalspunkte FP gefunden, so wird das aktuelle Vorhersagebild in einer Subtraktionseinheit 17 (z.B. bestehend aus einem Summierer mit invertierter Eingang für das Prädiktionsbild) von aktuellen Bild $I_n$ abgezogen und der verbleibende Restfehler bzw. die Restfehlerdaten RD werden gemeinsam mit den relevanten Merkmalspunkten FP in einer Kodiereinheit 10 verknüpft und kodiert.

Diese Codiereinheit 10 kann im Prinzip in beliebiger Weise aufgebaut sein. Bei dem vorliegenden Ausführungsbeispiel besteht sie aus einer Entropiekodiereinheit 13, mit welcher die Bewegungsvektordaten der relevanten Merkmalspunkte FP, d. h. deren Positionen und relevanten Vektorkomponenten, kodiert werden, aus einem Intra-Kodierer 11, welcher die Restfehlerdaten RD kodiert, sowie einer nachfolgenden MultiplexerEinheit 14, die die kodierten Restfehlerdaten RD und die kodierten Bewegungsvektordaten der Merkmalspunkte miteinander verknüpft, um diese dann an einem Ausgang A auszugeben. Von dort werden sie entweder über einen Übertragungskanal T übertragen oder in einem Speicher S gespeichert.

Bei der eben beschriebenen Vorgehensweise erfolgt die Ausgabe der relevanten Merkmalspunkte FP zur Entropiekodierung an die Entropiekodiereinheit 13 direkt (in Figur 5 über die Verbindung 15) . Alternativ ist auch noch ein Zwischenschritt in einer Positionsanordnungseinheit 12 möglich, welche die relevanten Merkmalspunkte FP in geeigneter Weise sortiert, um sie so in dem nachfolgenden Entropiekodierungsverfahren in der Entropiekodiereinheit 13 noch günstiger kodieren zu können.

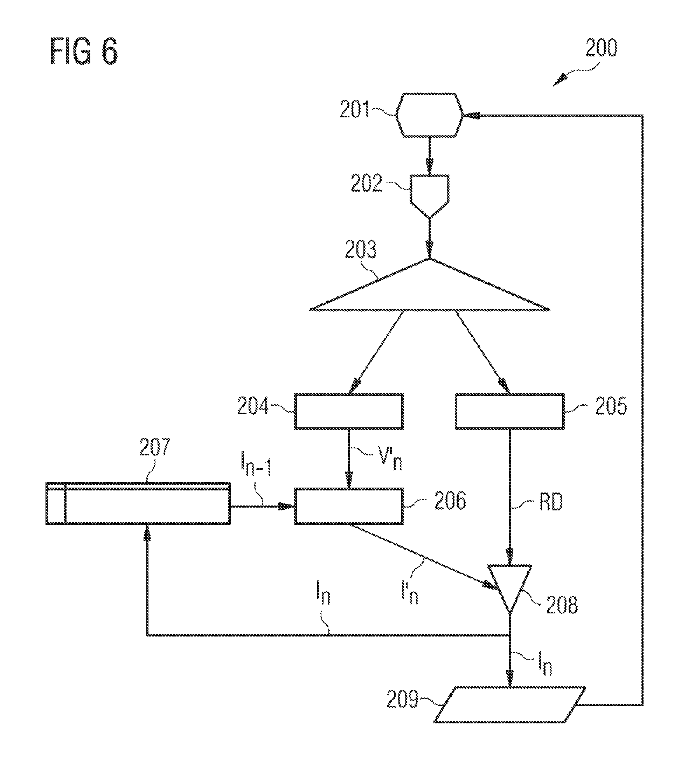

Figur 6 zeigt ein geeignetes Dekodierverfahren 200, mit dem die gemäß Figur 2 kodierten Bilddaten wieder dekodiert werden können. Auch bei diesem Verfahren 200 wird nur ein Durchlauf zur Dekodierung eines Bilds einer Bildsequenz dargestellt, welches nicht das erste Bild der Bildsequenz ist. Der Durchlauf beginnt im Schritt 201, wobei zunächst im Schritt 202 die kodierten Bilddaten empfangen bzw. aus einem Speicher ausgelesen werden. Im Schritt 203 erfolgt dann eine Separation, beispielweise ein Demultiplexen der intra-kodierten Restfehlerdaten und der Bewegungsvektordaten der relevanten Merkmalspunkte sowie eine Dekodierung der Bewegungsvektordaten.

Im Schritt 204 wird auf Basis der dekodierten Bewegungsvektordaten genau wie im Schritt 107 des Kodierverfahrens 100 gemäß Figur 2 ein dichtes Bewegungsvektorfeld $V'_n$ rekonstruiert. Parallel wird im Schritt 205 eine Intra-Dekodierung der Restfehlerdaten RD durchgeführt. Im Schritt 206 wird die auf Basis eines im Schritt 207 im vorhergehenden Durchlauf hinterlegten vorherigen Bildes $I_{n-1}$ sowie des im Schritt 204 erzeugten Bewegungsvektorfelds $V'_n$ ein Prädiktionsbild $I'_n$ erzeugt, welches dann im Schritt 208 mit den dekodierten Restfehlerdaten RD kombiniert wird, um so zu dem aktuellen Bild $I_n$ zu kommen, das dann im Schritt 209 weiterverwendet wird. Anschließend wird das Verfahren im Schritt 201 wieder zur Dekodierung eines nachfolgenden Bilds $I_{n+1}$ gestartet. Außerdem wird das erzeugte Bild In im Schritt 207 für den nachfolgenden Durchlauf gespeichert.

Entsprechend dem Kodierverfahren 100 erfolgt bei dem Dekodierverfahren 200 nach Figur 6 auch die Dekodierung komponentenweise separat. D.h. es werden separate Bewegungsvektorfelder $V'_n$ (bzw. Bewegungs-Vektorkomponentenfelder) für die x-Richtung und y-Richtung rekonstruiert. Dies ist aber der besseren Darstellbarkeit wegen in den Figuren nicht gezeigt.

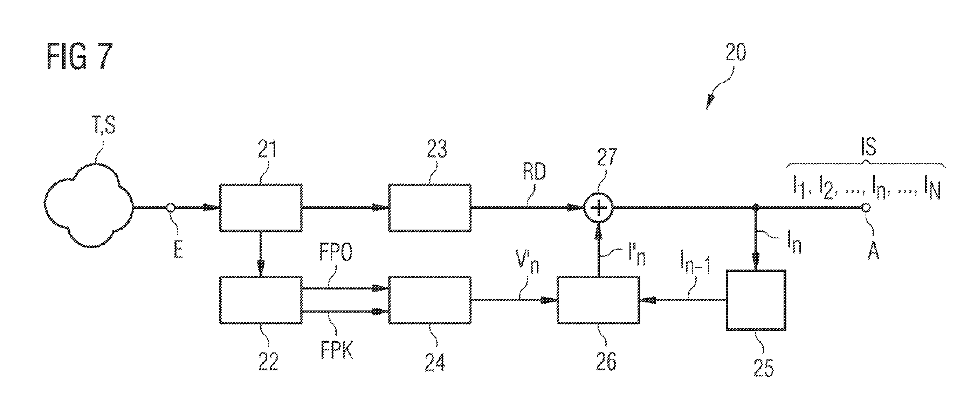

In Figur 7 ist grob schematisch eine Blockdarstellung einer geeigneten Dekodiervorrichtung 20 gezeigt. Nach einer Übernahme der kodierten Daten am Eingang E aus einem Übertragungskanal T oder einem Speicher S werden diese zunächst einer Separationseinheit 21, z.B. einem Demultiplexer, zugeführt. Die kodierten Restfehlerdaten werden einem Intradekodierer 23 zugeführt, welcher die Restfehlerdaten RD dekodiert. Die kodierten Bewegungsvektordaten der relevanten Merkmalspunkte werden einer Dekodiereinheit 22, beispielsweise einem Entropiedekodierer, insbesondere arithmetischem Dekodierer, zugeführt, welcher die Bewegungsvektordaten dekodiert und die Positionen, d.h. Ortsinformationen FPO über die relevanten Merkmalspunkte sowie die Bewegungsvektorkomponente FPK der relevanten Merkmalspunkte FP der Bewegungsvektorfeld-Rekonstruktionseinheit 24 zuführt. Diese ist im Prinzip in gleicher Weise wie die Bewegungsvektorfeld-Rekonstruktionseinheit 9 der Bildkodiervorrichtung 1 aufgebaut. Das dabei rekonstruierte dichte Bewegungsvektorfeld $V'_n$ wird dann einer Prädiktionsbild-Generierungseinheit 26 zugeführt, welche wiederum wie die Prädiktionsbild-Generierungseinheit 8 der Bildkodiereinrichtung 1 aufgebaut ist. Hier kann ebenfalls ein Entrauschen stattfinden. In einem Summierer 27 wird dann das Prädiktionsbild mit den Restfehlerdaten RD zusammengeführt, um so wieder am Ausgang A die dekodierte Bildsequenz IS ausgeben zu können. Zuvor wird noch in einem Pufferspeicher 25 das aktuell dekodierte Bild $I_n$ hinterlegt, um dieses im nachfolgenden Durchlauf innerhalb der Prädiktionsbild-Generierungseinheit 26 verwenden zu können.

Ein Hauptvorteil des erfindungsgemäßen Verfahrens im Gegensatz zu blockbasierten Verfahren besteht in dem glatten Beizegungsvektorfeld und der damit verbundenen Vermeidung von Blockartefakten. Dadurch ist die nachfolgende Ausnutzung von räumlichen Redundanzen nicht auf Pixel innerhalb eines Blocks beschränkt und es können bessere Restfehler-Kodierungsmethode eingesetzt werden.

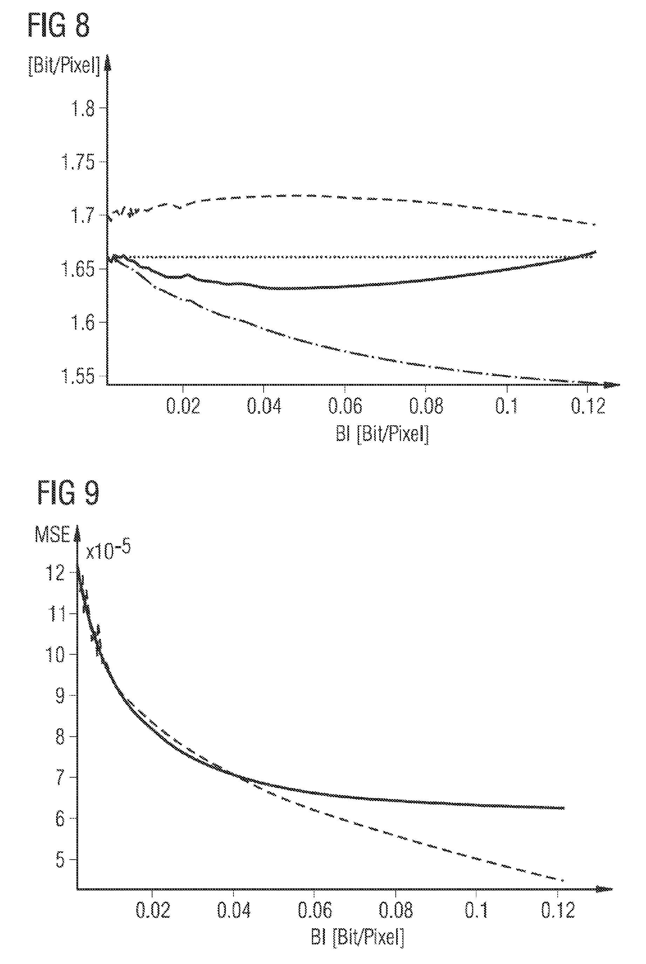

Figur 8 zeigt, wie sich die mittlere Restfehlerdatenmenge (in Bit/Pixel) nach einer zeitlichen und räumlichen Vorhersagemit einer wachsenden Bewegungsinformationsmenge BI (in Bit/Pixel) ändert. Die Bewegungsinformationsmenge BI ist hier die Datenmenge für die bei dem Verfahren zu Übertragende Bewegungsinformation, d.h. die Bewegungsvektoren bzw. Bewegungsvektorkomponenten und deren Positionen. Dargestellt ist dort eine Kurve (gestrichelt) für ein blockbasiertes Schema sowie eine Kurve (strichpunktiert) für das erfindungsgemäße Verfahren. Die durchgezogene Kurve zeigt ergänzend die Gesamtinformationsmenge (in Bit/Pixel), bestehend aus der Beizegungsinformationsmenge und der Restfehlerinformationsmenge mit dem erfindungsgemäßen Verfahren, wobei für die Restfehlerkodierung ein relativ einfaches Kompressionsverfahren verwendet wurde. Zum Vergleich ist zusätzlich die Gesamtinformationsmenge (in Bit/Pixel) für ein Verfahren dargestellt, bei dem direkt das vorhergehende Bild ohne eine Bewegungsschätzung zur Vorhersage verwendet wurde (gepunktete Kurve). Wie sich zeigt, ist ein blockbasiertes Schema im Prinzip sogar ungünstiger als ein derartiges Verfahren, bei dem die Vorhersage auf einem vorhergehenden Bild direkt beruht. Im Gegensatz dazu sinkt mit dem erfindungsgemäßen Verfahren die Restfehlerinformationsmenge, wenn zusätzliche Bewegungsvektorinformationen hinzukommen. Das Minimum der Gesamtinformationen bei dem erfindungsgemäßen Verfahren wird bei rund 1 bis 2 kB Bewegungsinformationsmenge pro Bild erreicht. Beispielsweise wird dieses Minimum bei dem Bild in den Figuren 10 und 11 mit 1170 Bewegungsvektorkomponenten erreicht, die in Figur 12 dargestellt sind. Die genaue Lage des Minimums hängt von der tatsächlichen Bewegung ab. Das relativ schlechte Abschneiden eines blockbasierten Verfahrens beruht hierbei in erster Linie auf den Blockartefakten. Nur für sehr große Bewegungsinformationsmengen, d. h. bei kleinen Blockgrößen, wirkt ein blockbasiertes Verfahren besser. Allerdings ist dann auch die Gesamtinformationsmenge erheblich höher als in dem erfindungsgemäßen Verfahren.

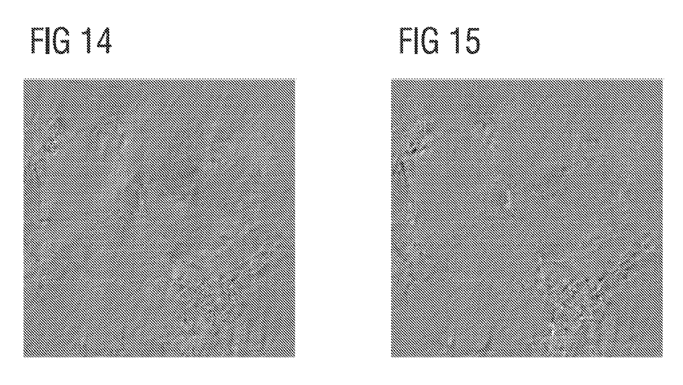

Figur 14 zeigt ein Restfehlerbild, welches mit dem erfindungsgemäßen Verfahren entsprechend den Figuren 10 bis 13 erzeugt wurde. Im Vergleich zeigt Figur 15 das entsprechende Restfehlerbild, welches mit einer blockbasierten Methode erzeugt wurde. Der genaue Vergleich dieser Bilder zeigt, dass im erfindungsgemäßen Verfahren keine Blockartefakte auftreten und es daher, insbesondere in Regionen mit hohen Intensitätsvariationen und nicht starrer Bewegung, zu einem geringeren Restfehler kommt.

Figur 9 zeigt zum Vergleich noch einmal, wie sich die Restfehlermenge hier in Form des Mean Squared Error MSE mit der Bewegungsinformationsmenge BI (in Bit/Pixel) bei dem erfindungsgemäßen Verfahren (durchgezogenen Kurve) und bei einem blockbasierten Verfahren (gestrichelte Kurve) ändert. Bis zu einer mittleren Bewegungsinformationsmenge sind die Restfehler in etwa gleich groß und lediglich bei hohen Bewegungsvektorinformationen, führt die blockbasierte Methode zu geringeren Restfehlern, wodurch sich der Anstieg der durchgezogenen Kurve in Figur 8 erklären lässt.

Es zeigt sich also, dass die oben beschriebene Variante des erfindungsgemäßen Verfahrens, bei dem nur Bewegungsvektorkomponenten von relevanten Merkmalspunkten übertragen bzw. gespeichert werden, wobei die relevanten Merkmalspunkte von einem vorgegebenen Konfidenzmaß abhängen, verglichen mit anderen Methoden zu nur sehr geringen Nebeninformationen führen. Insgesamt kann daher mit einem solchen Verfahren selbst bei einer verlustlosen Kompression die Datenmenge stärker reduziert werden. Blockartefakte bei verlustbehafteten Verfahren werden im Gegensatz zu blockbasierten Verfahren hierbei grundsätzlich vermieden.

Nachfolgend werden zwei weitere Kodierverfahren 300, 500 beschrieben, bei denen erfindungsgemäß das Konfidenzvektorfeld genutzt werden kann, um Bewegungsvektorfeld-Rekonstruktionsparameter zu ermitteln. Beide Verfahren basieren darauf, dass mit Hilfe des Konfidenzvektorfeldes auf der Kodiererseite Koeffizienten ermittelt werden, um das Bewegungsvektorfeld durch eine lineare Überlagerung von Basisfunktionen zu rekonstruieren.

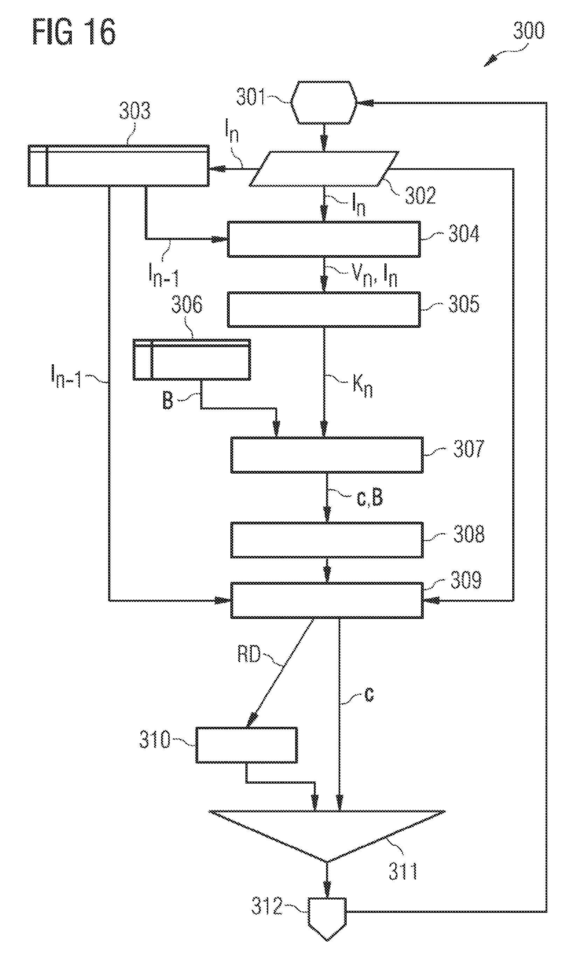

Ein Flussdiagramm für eine einfache Variante eines solchen Verfahrens 300 wird in Figur 16 gezeigt. Hier ist wieder nur die Bearbeitung eines Bilds In der Bildsequenz dargestellt, wobei davon ausgegangen wird, dass bereits ein vorhergehendes Bild hinterlegt ist und im Rahmen der Bildkodierung verwendet werden kann.

Das Verfahren beginnt am Schritt 301, wobei im Schritt 302 zunächst wieder das Rohdatenbild $I_n$ eingelesen wird, um es zum einen im Schritt 303 für die Kodierung des nachfolgenden Bilds zu hinterlegten und zum anderen im Schritt 304 für das aktuelle Bild $I_n$ ein dichtes Bewegungsvektorfeld $V_n$ zu erzeugen. Auf Basis des dichten Bewegungsvektorfelds $V_n$ und des aktuellen Bilds In wird dann im Schritt 305 das Konfidenzvektorfeld $K_n$ bestimmt. Die Schritte 304 und 305 unterscheiden sich nicht von den Schritten 104, 105 in dem Verfahren gemäß Figur 2, so dass auf die Erläuterungen hierzu verwiesen werden kann.

Im Schritt 307 werden nun jedoch die passenden Koeffizienten bestimmt, um das dichte Bewegungsvektorfeld durch eine Linearkombination von vorgegebenen Basisfunktionen, welche im Schritt 306 aus einem Speicher entnommen werden, darzustellen. Dies erfolgt durch eine Minimierung der Zielfunktion

$$\left\| \mathbf{K} * \left( \mathbf{B} * \mathbf{c} - \mathbf{v} \right) \right\| \tag{4}$$

nach **c**. Hierbei ist **v** ein Vektor, der in einer Reihe alle Vektorkomponenten des aktuellen dichten Bewegungsvektorfelds $V_n$ enthält, d. h. wenn das Bild $q = M \cdot N$ einzelne Pixel enthält, hat **v** die Länge q und die einzelnen Vektorelemente entsprechen den hintereinander geschriebenen Komponenten des dichten Bewegungsvektorfelds. Wenn ein Bild mit 512 x 512 Pixeln verarbeitet wird, hat der Vektor **v** also insgesamt 512 x 512 = 262.144 Elemente. Dabei wird hier zunächst nur eine Komponente, beispielsweise nur die x-Komponente, betrachtet, da auch bei dieser zweiten Ausführungsform des erfindungsgemäßen Verfahrens die Betrachtung komponentenweise erfolgt. D. h. eine Ermittlung der Koeffizienten erfolgt für die x-Komponente und y-Komponente getrennt, so dass entsprechend getrennt für diese Komponenten die Optimierung gemäß Gleichung (4) separat ausgeführt wird. Alternativ könnte z. B. auch ein einzelner Gesamtvektor **v** mit der doppelten Anzahl an Komponenten verwendet werden, oder z. B. nach Winkel und Vektorlänge aufgetrennt werden o.ä.. **c** ist hier ein Vektor mit den gesuchten Koeffizienten (mit **c** werden daher im Weiteren auch einfach pauschal die Koeffizienten als Gesamtheit bezeichnet). Wenn p Basisfunktionen verwendet werden sollen hat der Vektor **c** dementsprechend p Elemente. Mögliche Beispiele für die Anzahl der Basisfunktionen sind p = 256, p= 1024 oder p = 10000. Es können aber auch beliebige andere Werte gewählt werden.

**B** ist eine q x p - Basisfunktionsmatrix, die in ihren Spalten die vorgegebenen Basisfunktionen $b_1,...,b_p$ enthält, d. h. die B = ($b_1$, $b_2$, $b_3$, ...) (mit **B** werden daher im Weiteren auch einfach pauschal die Basisfunktionen als Gesamtheit bezeichnet). Die Konfidenzwerte bzw. das Konfidenzvektorfeld $K_n$ für das aktuelle Bild ist in Gleichung (4) auf einfache Weise als eine Art Gewichtungsfunktion K berücksichtigt, wobei es sich hier um eine q x q -Matrix mit den Gewichtswerten auf der Diagonale handelt und Nullen im Rest der Matrix.

Bei der gewichteten linearen Regression gemäß Gleichung (4) werden Bewegungsvektoren mit hohen Konfidenzwerten besser angenähert als Vektoren mit niedrigen Konfidenzwerten. Dadurch werden automatisch erheblich bessere Koeffizienten zur Rekonstruktion des dichten Bewegungsvektorfelds ermittelt als wenn keine Berücksichtigung der Konfidenzwerte erfolgen würde.

Sind die Koeffizienten **c** bestimmt, so erfolgt im Schritt 308 eine lineare Vektorfeldrekonstruktion auf Basis der vorgegebenen Basisfunktionen **B** und der zuvor im Schritt 307 bestimmten Koeffizienten **c**. Im Schritt 309 wird dann mittels des so rekonstruierten dichten Bewegungsvektorfelds und des vorhergehenden Bilds ein Prädiktionsbild erzeugt und dieses vom aktuellen Bild abgezogen, so dass die Restfehlerdaten ermittelt werden. Diese werden im Schritt 310 in einem Intrakodierverfahren kodiert. Die Koeffizienten **c** werden dann als Bewegungsvektorfeld-Rekonstruktionsparameter im Schritt 311 ebenso einer Entropiekodierung zugeführt und mit den intrakodierten Restfehlerdaten RD verknüpft, so dass sie dann im Schritt 312 gesendet oder gespeichert werden können. Danach startet im Schritt 301 die Kodierung des nächsten Bilds der Bildsequenz.

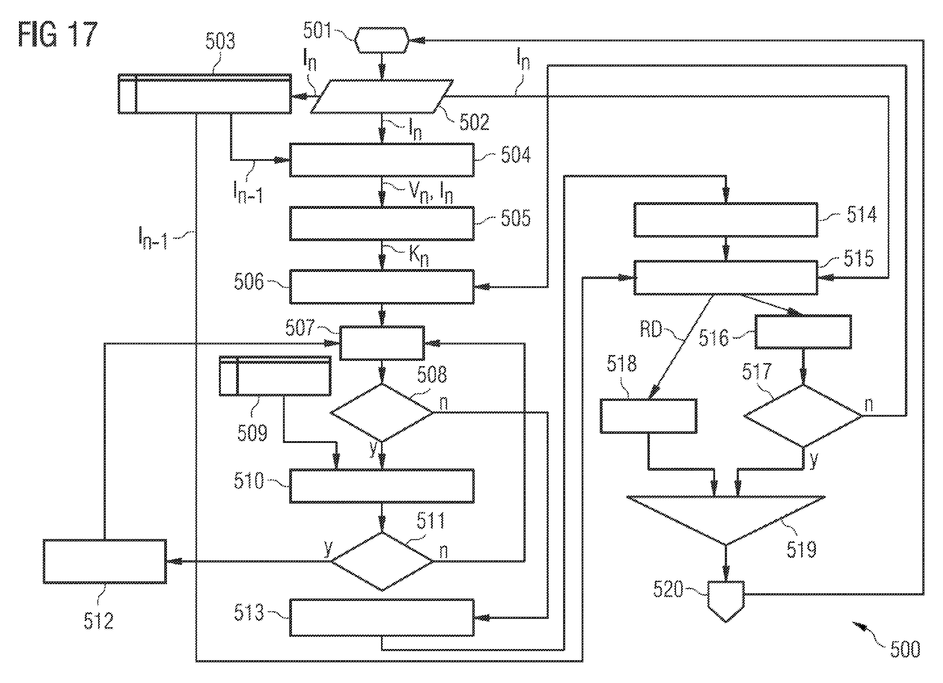

Das Kodierverfahren 300 gemäß Figur 16 setzt voraus, dass vorab ein ideales, möglichst kleines Set von Basisfunktionen $b_1$, $b_2$, $b_3$, ... ausgewählt wird, welches auch dem Decoder bekannt ist. Als Alternative hierzu zeigt Figur 17 ein etwas abgewandeltes Kodierverfahren 500.

Die Schritte 501, 502, 503, 504 und 505 entsprechen genau den Schritten 301 bis 305 bei dem Verfahren gemäß Figur 16, d. h. es wird ein RAW-Bild $I_n$ gelesen und für eine Kodierung des nachfolgenden Bilds $I_n$ hinterlegt und gleichzeitig auf Basis des aktuellen Bildes $I_n$ ein dichtes Bewegungsvektorfeld $V_n$ ermittelt und darauf basierend dann ein Konfidenzvektorfeld $K_n$.

Anders als bei dem Kodierverfahren 300 nach Figur 16 werden aber bei dem Kodierverfahren 500 nach Figur 17 auf Basis des dichten Bewegungsvektorfelds $V_n$ und des Konfidenzvektorfelds $K_n$ nicht nur die Koeffizienten bzw. der Koeffizientenvektor **c** sondern auch die optimalen Basisfunktionen $b_1,...,b_p$ bzw. die Basisfunktionsmatrix **B** bestimmt.

Dies erfolgt in mehreren Schleifendurchgängen über die Schritte 506 bis 517, wobei bei jedem Schleifendurchgang eine "beste" Basisfunktion und ein zugehöriger Koeffizient ermittelt werden. Innerhalb jedes Schleifendurchgangs wird dabei mehrfach eine innere Schleife mit den Schritten 507 bis 512 durchlaufen, um die "beste" Basisfunktion (und den zugehörigen Koeffizienten) aus einer größeren Gruppe von möglichen, vorgegeben Basisfunktionen auszuwählen.

Hierzu werden im Schritt 506 eine Laufvariable und ein Zielwert initialisiert, z.B. die Laufvariable auf 0 gesetzt und der Zielwert auf unendlich. Im Schritt 507 der inneren Schleife erfolgt jeweils eine Inkrementierung der Laufvariablen (z.B. durch Erhöhung um den Wert 1) . Im Schritt 508 wird durch Abfrage des Werts der Laufvariablen geprüft, ob schon alle Basisfunktionen der größeren Gruppe von möglichen Basisfunktionen geprüft wurden. Hierzu kann einfach kontrolliert werden, ob die Laufvariable noch unter der Anzahl der für eine Auswahl zur Verfügung stehenden Basisfunktionen liegt. Ist dies der Fall (Abzweig "y") so wird im Schritt 510 eine Optimierung analog zu Gleichung (4) durchgeführt, wobei hier aber die Gleichung

$$\left\| K * (b * c - v) \right\| \qquad (5)$$

nach c minimiert wird. Die Konfidenzwerte bzw. das Konfidenzvektorfeld $K_n$ für das aktuelle Bild werden auch in Gleichung (5) durch die Matrix **K** berücksichtigt. Anders als in Gleichung (4) ist hier **b** jedoch nur ein Vektor, mit einer einzelnen im jeweiligen Durchlauf der Schleife 507 bis 512 zu prüfenden Basisfunktion **b** aus der Gruppe der möglichen, vorgegebenen Basisfunktionen. Hierzu wird im Schritt 509 eine Basisfunktion aus dieser größeren Gruppe von Basisfunktionen ausgewählt. Im Prinzip kann dies in einer beliebigen Reihenfolge geschehen, es ist lediglich sicher zu stellen, dass beim mehrfachen Durchlauf der Schleife 507 bis 512 jede der zur Auswahl stehenden Basisfunktionen nur einmal geprüft wird.

Entsprechend ist c hier, anders als in Gleichung (4), kein Vektor mit den gesuchten Koeffizienten, sondern nur ein einzelner zu der jeweiligen Basisfunktionen **b** passender Koeffizient, d.h. ein Skalar.

Der Vektor **v** repräsentiert in Gleichung (5) nur beim ersten Durchlauf der äußeren Schleife 506 bis 517 das aktuelle dichte Bewegungsvektorfeld $V_n$. In den weiteren Durchläufen dieser äußeren Schleife repräsentiert der Vektor **v** nur noch ein "Rest-Bewegungsvektorfeld", von dem das mit den bereits in den vorherigen Durchläufen ermittelten Basisfunktionen und Koeffizienten rekonstruierbare Vektorfeld abgezogen ist, das heißt bei jeder Iteration im äußeren Durchlauf wird der Vektor **v** aktualisiert:

$$v := v - b * c \qquad (6)$$

Um für die aktuell geprüfte Basisfunktion **b** den optimalen Koeffizienten c zu finden, wird die Funktion gemäß Gleichung (5) im Schritt 510 nach dem Koeffizienten c minimiert. Der dabei erreichte Funktionswert wird im Schritt 511 mit dem Zielwert, der im Schritt 506 initialisiert wurde, verglichen. Liegt der Funktionswert unter dem Zielwert (Abzweig "y") so wird im Schritt 512 der Zielwert aktualisiert, indem er durch den Funktionswert ersetzt wird. Beim jedem ersten Durchlauf der inneren Schleife ist dies aufgrund der Initialisierung des Zielwerts im Schritt 506 immer der Fall. Außerdem werden im Schritt 512 die aktuell geprüfte Basisfunktion **b** und der zugehörige optimierte Koeffizient c als vorübergehende optimale Werte gespeichert.

Anschließend wird im Schritt 507 die Laufvariable wieder inkrementiert und die innere Schleife wird erneut durchlaufen, wobei nun im Schritt 509 eine weitere der Basisfunktionen **b** ausgewählt und im Schritt 510 durch Minimierung der Gleichung (5) mit der neuen Basisfunktion **b** der optimale Koeffizient c dazu ermittelt wird. Wird dann bei der nachfolgenden Abfrage im Schritt 511 festgestellt, dass der aktuelle Funktionswert unter dem aktualisierten Zielwert liegt (Abzweig "y"), d.h. die aktuelle Basisfunktion "besser" als eine vorhergehende "beste" Basisfunktion ist, erfolgt erneut im Schritt 512 die Aktualisierung des Zielwerts und die aktuell geprüfte Basisfunktion **b** und der zugehörige optimierte Koeffizient c werden als neue vorübergehende optimale Werte gespeichert. Andernfalls (Abzweig "n") erfolgt sofort ein Rücksprung in Schritt 507, um die Laufvariable zu inkrementieren und dann eine neue Basisfunktion zu testen.

Wird bei einem der Durchläufe der inneren Schleife 507 bis 512 im Schritt 508 festgestellt, dass die Laufvariable die Anzahl der zur Auswahl stehenden Basisfunktionen erreicht hat, d.h.. dass alle Basisfunktionen getestet wurden, so erfolgt ein Abbruch der inneren Schleife (Abzweig "n").

Im Schritt 513 erfolgte dann die oben anhand von Gleichung (6) beschriebene Aktualisierung des Vektors **v,** wobei die zuvor in der inneren Schleife gefundene "beste" Basisfunktion **b** und der zugehörige "beste" Koeffizient c verwendet werden. Außerdem wird in diesem Schritt die gefundene Basisfunktion **b** in einer Basisfunktionsmatrix **B** eingebaut und der zugehörige Koeffizient c in einem Koeffizientenvektor **c**, so dass letztlich als Ergebnis des gesamten Verfahrens eine optimale Basisfunktionsmatrix **B** und ein optimaler Koeffizientenvektor **c** vorliegen, ähnlich wie dies bei dem Verfahren nach Figur 16 der Fall ist (bei dem allerdings nur der Koeffizientenvektor **c** gesucht wird und die Basisfunktionsmatrix **B** vorgegeben ist).

Im Schritt 514 wird dann analog zum Schritt 308 gemäß Figur 16 eine lineare Vektorfeldrekonstruktion auf Basis der bereits vorhandenen Basisfunktionen und Koeffizienten durchgeführt. Im Schritt 515 wird dann mittels des so rekonstruierten dichten Bewegungsvektorfelds und des vorhergehenden Bilds wieder ein Prädiktionsbild erzeugt und dieses vom aktuellen Bild abgezogen, so dass die Restfehlerdaten ermittelt werden.

Im Schritt 516 wird dann der mittlere quadratische Fehler MSE berechnet und im Schritt 517 wird geprüft, ob dieser mittlere quadratische Fehler MSE kleiner als ein maximal zulässiger Fehler $MSE_{Max}$ ist. Ist dies nicht der Fall (Abzweig "n"), erfolgt ein Rücksprung in den Schritt 506, damit dann eine weitere optimale Basisfunktion gesucht werden kann, um das bisherige Set von Basisfunktionen **B,** d.h. die Basisfunktionsmatrix **B**, zu erweitern bzw. zu ergänzen, so dass die Rekonstruktion des dichten Bewegungsvektorfelds noch besser wird. Es erfolgt dann zunächst eine erneute Initialisierung der Laufvariable sowie des Zielwerts und die innere Schleife 507 bis 512 wird wieder für alle zur Auswahl stehenden Basisfunktionen durchlaufen.

Wird im Schritt 517 festgestellt, dass der mittlere quadratische Fehler MSE kleiner als der maximal zulässiger Fehler $MSE_{Max}$ (Abzweig "y") ist, so kann das Verfahren beendet werden da alle optimalen Basisfunktionen **B** und ihre zugehörigen Koeffizienten c gefunden wurden (mit **B** werden auch in diesem Verfahren pauschal die Basisfunktionen als Gesamtheit bezeichnet und mit **c** die zugehörigen Koeffizienten unabhängig von Ihrer Darstellung als Matrix bzw. Vektor). Bei einer alternativen Abbruchsvariante kann das Verfahren im Schritt 517 auch bei Erreichen einer bestimmten Anzahl an Basisfunktionen abgebrochen werden.

Die Intra-Kodierung der Restfehlerdaten RD im Schritt 518 sowie die Entropiekodierung der Koeffizienten **c** und der Basisfunktionen **B** als Bewegungsvektorfeld-Rekonstruktionsparameter sowie die Verknüpfung mit den kodierten Restfehlerdaten, beispielsweise im Rahmen eines Multiplex-Verfahrens, im Schritt 519 sowie die anschließende Versendung oder Speicherung im Schritt 520 entspricht wieder der Vorgehensweise in den Schritten 310, 311 und 312 in Figur 16. Um Speicher- bzw. Übertragungskapazität einzusparen, werden in der Realität nur begrenzte Informationen übertragen, die gerade ausreichen, die Basisfunktion **B** beim Dekodierer zu identifizieren, z.B. eine Indexnummer einer großen Auswahl von dem Dekodierer bekannten Basisfunktionen oder dergleichen. Eventuell wäre auch ein Kodierung der Basisfunktionen als analytische Funktionen (z.B. $\cos(10 \cdot x + 3 \cdot y)$) möglich. Im Folgenden wird daher unter einer Kodierung bzw. Übertragung und/oder Speicherung der Basisfunktionen **B** in der Regel eine solche Informationsübertragung in reduzierter Form verstanden.

Der Vollständigkeit halber wird darauf hingewiesen, dass auch bei dem Kodierverfahren 500 gemäß Figur 17 - wie bei den anderen Verfahren 100, 300, die Ermittlung der Koeffizienten und Basisfunktionen komponentenweise separat für die x-Richtung und y-Richtung erfolgt. Dies gilt entsprechend für das später erläuterte Dekodierverfahren hierzu.

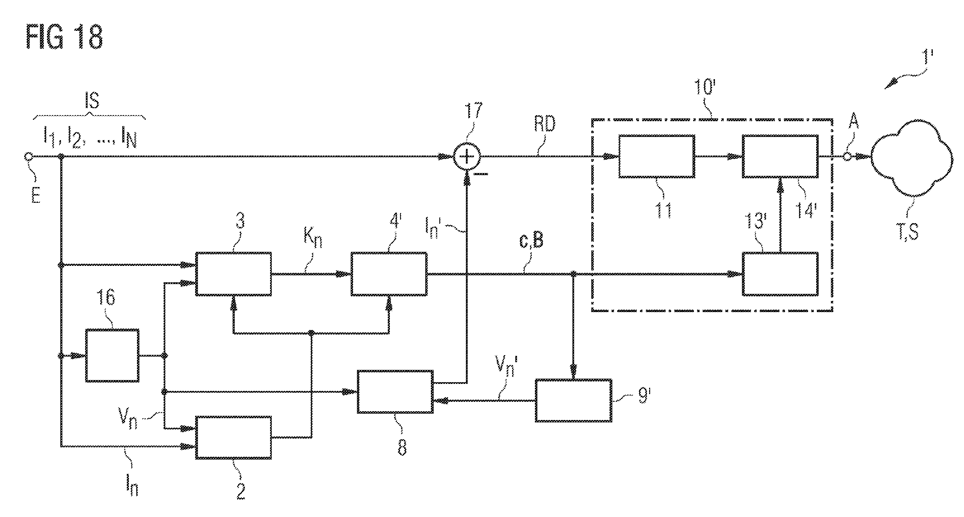

Figur 18 zeigt ein vereinfachtes Blockschaltbild einer Bildkodiervorrichtung 1', wie sie zur Durchführung eines Verfahrens gemäß den Figuren 16 und 17 verwendet werden kann. Im Wesentlichen ist diese Bildkodiervorrichtung 1' sehr ähnlich wie die Bildkodiervorrichtung 1 in Figur 5 aufgebaut. Auch hier wird an einem Eingang E die Bildsequenz IS übernommen und ein aktuelles Bild $I_n$ zunächst in einem Pufferspeicher 16 hinterlegt. Außerdem wird in einer Bewegungsvektorfeld-Ermittlungseinheit 2 ein dichtes Bewegungsvektorfeld $V_n$ für das aktuelle Bild erzeugt und in einer Konfidenzvektorfeld-Ermittlungseinheit 3 das Konfidenzvektorfeld $K_n$ ermittelt.

Jedoch besteht die Rekonstruktionsparameter-Ermittlungseinheit 4' hier aus einer Regressionstransformationseinheit, welche bei dem Verfahren 300 gemäß Figur 16 den Verfahrensschritt 302 durchführt bzw. welche bei einem Verfahren 500 gemäß Figur 17 die Verfahrensschritte 507 bis 517 veranlasst bzw. steuert.

Wie bei dem Ausführungsbeispiel gemäß Figur 5 weist auch diese Vorrichtung eine Bewegungsvektorfeld-Rekonstruktionseinheit 9' auf, welche hier aber durch eine Linearkombination der vorgegebenen oder ebenfalls ermittelten Basisfunktionen **B** mit den ermittelten Koeffizienten c das Vektorfeld rekonstruiert, wie dies anhand der Schritte 308 im Verfahren 300 gemäß Figur 16 bzw. 514 im Verfahren 500 gemäß Figur 17 bereits erklärt wurde.

Eine Prädiktionsbild-Generierungseinheit 8 sorgt dann für die Erzeugung des Prädiktionsbilds gemäß den Verfahrensschritten 309 bzw. 515. Dieses Prädiktionsbild wird im Subtraktionsglied 17 vom aktuellen Bild abgezogen, um die Restfehlerdaten RD zu gewinnen.

Sowohl die aktuellen Koeffizienten **c** bzw. ggf. auch die im Verfahren gemäß Figur 17 ermittelten Basisfunktionen **B** werden dann ebenso wie die Restfehlerdaten RD an eine Kodiereinheit 10' gegeben, um die fertig kodierten und verknüpften Daten am Ausgang A auf einen Übertragungskanal T zu übergeben oder in einem Speicher S zu hinterlegen. Die Kodiereinheit 10' besteht hier aus einer Intra-Kodiereinheit 11 zur Kodierung der Restfehlerdaten RD und einem Entropiekodierer 13', welcher die Koeffizienten c und ggf. die zugehörigen Basisfunktionen **B** kodiert. Die kodierten Daten aus den Blöcken 13' und 11 werden dann in einem Multiplexen 14' miteinander verknüpft.

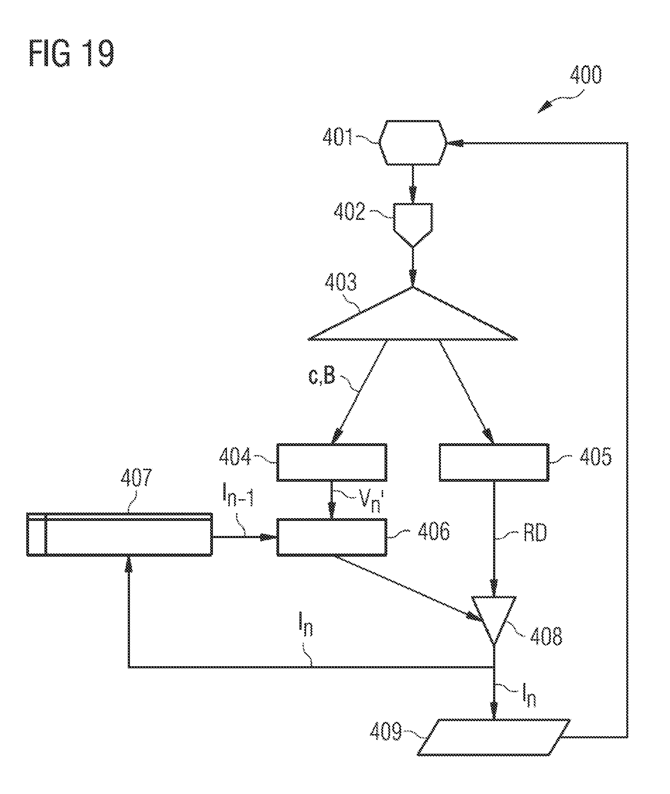

Figur 19 zeigt, wie auf Seiten der Dekodiereinheit die mit dem Verfahren 300 bzw. 500 kodierten Bilddaten wieder dekodiert werden können. Auch hier ist wieder nur die Dekodierung eines Bilds der Bildsequenz dargestellt, wobei davon ausgegangen wird, dass bereits die Daten über ein vorhergehendes Bild vorliegen. Das Dekodierverfahren 400 beginnt im Schritt 401, wobei im Schritt 402 zunächst die kodierten Daten eingelesen werde. Anschließend erfolgt im Schritt 403 wieder ein De-Multiplexen der Daten sowie eine Entropiekodierung der Koeffizienten **c** und ggf. der Basisfunktionen **B,** die zur Rekonstruktion des Bewegungsvektorfelds erforderlich sind. In diesem Schritt werden die Restfehlerdaten absepariert und diese werden im Schritt 405 einer Intradekodierung zugeführt. Die Informationen **c, B** für die Bewegungsvektorfeld-Rekonstruktionen werden dann im Schritt 404 genutzt, um dort durch eine lineare Kombination der Basisfunktionen **B** mit den vorgegebenen Koeffizienten c das Bewegungsvektorfeld $V'_n$ zu rekonstruieren. Im Schritt 406 wird dann das Bewegungsvektorfeld $V'_n$ genutzt, um auf Basis des im vorherigen Durchlauf gespeicherten Bildes $I_{n-1}$ (Schritt 407) ein Prädiktionsbild zu erzeugen. Dieses wird dann im Schritt 408 mit den dekodierten Restfehlerdaten RD verknüpft, um so im Schritt 409 das fertige aktuelle Rohdatenbild $I_n$ ausgeben bzw. weiterverwenden zu können.

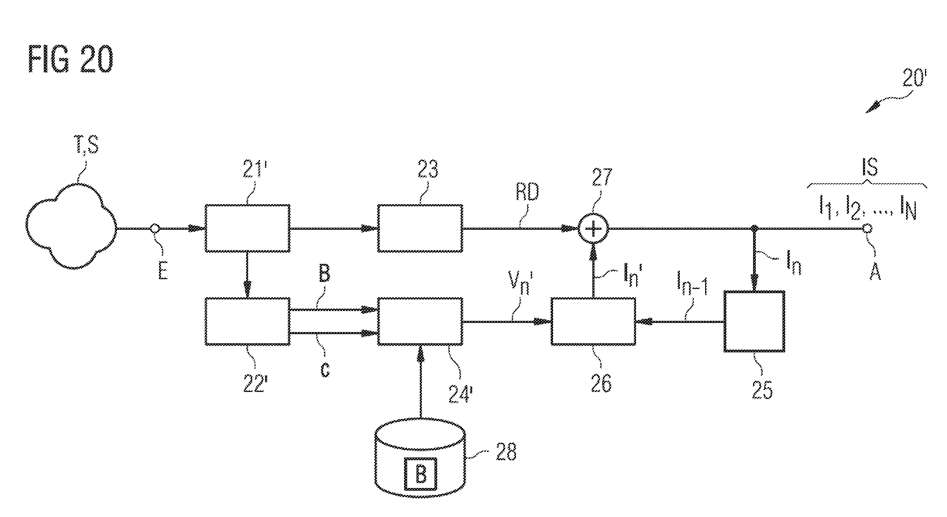

Figur 20 zeigt eine vereinfachte Blockdarstellung der Dekodiereinrichtung 20', welche wiederum sehr ähnlich zu der Dekodiervorrichtung 20 gemäß Figur 7 aufgebaut ist. Am Eingang E werden auch hier die kodierten Daten von einem Übertragungskanal T oder aus einem Speicher S entnommen. In einer Separationseinheit 21', z.B. einem Demultiplexer, erfolgt zunächst die Trennung der kodierten Restfehlerdaten und der kodierten Bewegungsvektorfeld-Rekonstruktionsparameter, hier der Koeffizienten **c**, und ggf. der Basisfunktionen **B** bei dem Verfahren 500 gemäß Figur 17. Diese kodierten Bewegungsvektorfeld-Rekonstruktionsparameter **c, B** werden dann in einer Dekodiereinheit 22' dekodiert und an eine Bewegungsvektorfeld-Rekonstruktionseinheit 24' übergeben. Wurde zur Kodierung ein Kodierverfahren 300 gemäß Figur 16 genutzt, so müssen hier nur die Koeffizienten **c** übergeben werden und die Be Bewegungsvektorfeld-Rekonstruktionseinheit 24' entnimmt die erforderlichen vorgegebenen Basisfunktionen **B** aus einem Speicher 28. Bei einer Kodierung mit dem Kodierverfahren 500 gemäß Figur 17 ist in diesem Speicher 28 z.B. dann die Gesamtzahl aller bei der Kodierung zur Auswahl zur Verfügung stehenden Basisfunktionen hinterlegt. Die übertragenen und entsprechend von der Dekodiereinheit 22' gelieferten Informationen zur Identifizierung der ausgewählten Basisfunktionen **B** werden dann genutzt, um diese im Speicher 28 zu finden.

Das von der Bewegungsvektorfeld-Rekonstruktionseinheit 24' rekonstruierte dichte Bewegungsvektorfeld $V'_n$ wird dann der Prädiktionsbild-Generierungseinheit 26 zugeführt, welche aus dem rekonstruieren Bewegunsvektorfeld sowie einem zuvor gespeicherten Bild $I_{n-1}$, welches aus einem Pufferspeicher 25 entnommen werden kann, ein Prädiktionsbild $I'_n$ erzeugt. Parallel dazu werden die kodierten Restfehlerdaten von einem Intra-Dekodierer 23 dekodiert und die Restfehlerdaten RD werden dann mit dem Prädiktionsbild $I'_n$ in einem Summierer 27 überlagert, so dass schließlich das komplette dekodierte Bild $I_n$ der Bildsequenz IS vorliegt. Dieses kann wiederum für die Dekodierung des nachfolgenden Bilds im Pufferspeicher 25 hinterlegt werden und am Ausgang A für die weitere Verwendung ausgegeben werden.

Es wird abschließend noch einmal darauf hingewiesen, dass es sich bei den zuvor beschriebenen detaillierten Verfahren und Aufbauten um Ausführungsbeispiele handelt und dass das Grundprinzip auch in weiten Bereichen vom Fachmann variiert werden kann, ohne den Bereich der Erfindung zu verlassen, soweit er durch die Ansprüche vorgegeben ist. Auch wenn die Erfindung vorstehend anhand von Bildern im medizinischen Bereich beschrieben wurde, ist die Erfindung auch für die Kodierung von anderen Bildsequenzen nutzbringend einsetzbar, insbesondere wenn diese in stärkerem Maße Verformungsbewegungen darstellen. Es wird der Vollständigkeit halber auch darauf hingewiesen, dass die Verwendung der unbestimmten Artikel "ein" bzw. "eine" nicht ausschließt, dass die betreffenden Merkmale auch mehrfach vorhanden sein können. Ebenso schließt der Begriff "Einheit" nicht aus, dass diese aus mehreren Komponenten besteht, die gegebenenfalls auch räumlich verteilt sein können.

**Patentansprüche**

1.  Kodierverfahren (100, 300, 500) zur Kompression einer Bildsequenz (IS) umfassend folgende Verfahrensschritte:

    - Ermittlung eines dichten Bewegungsvektorfelds ($V_n$) für einen aktuellen Bildbereich ($I_n$) der Bildsequenz (IS) durch Vergleich mit zumindest einen weiteren Bildbereich ($I_{n-1}$) der Bildsequenz (IS),
    - Ermittlung eines Konfidenzvektorfeldes ($K_n$) für den aktuellen Bildbereich ($I_n$), welches für jeden Bewegungsvektor des Bewegungsvektorfelds ($V_n$) zumindest einen Konfidenzwert angibt,
    - Ermittlung von Bewegungsvektorfeld-Rekonstruktionsparametern (FP, **c, B**) für den aktuellen Bildbereich ($I_n$) auf Basis des Bewegungsvektorfelds ($V_n$) und des Konfidenzvektorfeldes ($K_n$).

2.  Verfahren nach Anspruch 1, **dadurch gekennzeichnet, dass**

    - mittels der Bewegungsvektorfeld-Rekonstruktionsparameter (FP, **c, B**) ein Bewegungsvektorfeld ($V'_n$) rekonstruiert wird,
    - auf Basis von Bewegungsvektoren des rekonstruierten Bewegungsvektorfelds ($V'_n$) eine Bildbereichsprädiktion ($I'_n$) für den aktuellen Bildbereich ($I_n$) ermittelt wird,
    - Restfehlerdaten (RD) der Bildbereichsparädiktion ($I'_n$) im Hinblick auf den aktuellen Bildbereich ($I_n$) ermittelt werden und

- die Bewegungsvektorfeld-Rekonstruktionsparameter (FP, **c, B**) mit den Restfehlerdaten (RD) des aktuellen Bildbereichs ($I_n$) verknüpft werden.

3. Verfahren nach Anspruch 1 oder 2, **dadurch gekennzeichnet, dass** das Bewegungsvektorfeld ($V_n$) und/oder das Konfidenzvektorfeld ($K_n$) komponentenweise in Form von Vektorkomponentenfeldern ($V_x$, $V_y$) erzeugt und/oder bearbeitet werden.

4. Verfahren nach einem der Ansprüche 1 bis 3, **dadurch gekennzeichnet, dass** zur Ermittlung von Bewegungsvektorfeld-Rekonstruktionsparametern (FP) relevante Merkmalspunkte (FP) des Bewegungsvektorfelds ($V_n$) ermittelt werden und die Bewegungsvektorfeld-Rekonstruktionsparameter (FP) jeweils eine Ortsinformation (FPO) eines relevanten Merkmalspunkts (FP) und zumindest eine Bewegungsvektorkomponente (FPK) eines Bewegungsvektors an dem betreffenden relevanten Merkmalspunkt umfassen.

5. Verfahren nach Anspruch 4, **dadurch gekennzeichnet, dass** zur Ermittlung der relevanten Merkmalspunkte (FP) zunächst Kandidaten-Merkmalspunkte (KFP) auf Basis des Konfidenzvektorfeldes ($K_n$) ermittelt werden und dann relevante Merkmalspunkte (FP) aus den Kandidaten-Merkmalspunkten (KFP) selektiert werden.

6. Verfahren nach Anspruch 5, **dadurch gekennzeichnet, dass** zur Selektion der relevanten Merkmalspunkte (FP) aus den Kandidaten-Merkmalspunkten (KFP) für einzelne Kandidaten-Merkmalspunkte (KFP) jeweils ein Bewegungsvektorfeld ($V'_n$) und/oder eine Bildbereichsprädiktion ($I'_n$) für den aktuellen Bildbereich ($I_n$) ohne eine zu diesem Kandidaten-Merkmalspunkt (FP) gehörende Bewegungsvektorkomponente erzeugt wird und die Auswirkung auf das rekonstruierte Bewegungsvektorfeld ($V'_n$) und/oder die Bildbereichsprädiktion ($I'_n$) geprüft wird.

7. Verfahren nach einem der Ansprüche 1 bis 3, **dadurch gekennzeichnet, dass** als Bewegungsvektorfeld-Rekonstruktionsparameter (**c**) auf Basis des Bewegungsvektorfelds und des Konfidenzvektorfeldes ($V_n$) Koeffizienten (c) ermittelt werden, um das Bewegungsvektorfeld ($V'_n$) mit Hilfe von vorgegebenen Basisfunktionen (**B**) zu rekonstruieren.

8. Verfahren nach Anspruch 7, **dadurch gekennzeichnet, dass** als Bewegungsvektorfeld-Rekonstruktionsparameter (**B**) auf Basis des Bewegungsvektorfelds ($V_n$) und des Konfidenzvektorfeldes ($K_n$) zu den Basisfunktionskoeffizienten (**c**) gehörende Basisfunktionen (**B**) zur Rekonstruktion des Bewegungsvektorfelds ($V'_n$) ermittelt werden.

9. Verfahren nach einem der Ansprüche 1 bis 8, **dadurch gekennzeichnet, dass** zur Ermittlung des Konfidenzvektorfeldes ($K_n$) für jede Position des Bewegungsvektorfelds ($V_n$) eine Abweichungsfläche ermittelt wird, welche die Abweichungen eines auf dem Bewegungsvektor an der aktuellen Position basierenden Prädiktionsbildpunktes von einem Bildpunkt an der betreffenden Position im aktuellen Bildbereich bei einer Veränderung des Bewegungsvektors um eine definierte Variation enthält, und dass als ein Konfidenzwert jeweils in zumindest einer Richtung ein Krümmungswert der Abweichungsfläche ermittelt wird.

10. Dekodierverfahren (200, 400) zur Dekodierung einer Bildsequenz (IS), welche mit einem Kodierverfahren nach einem der Ansprüche 1 bis 9 kodiert wurde, bei dem für einen aktuellen Bildbereich ($I_n$) auf Basis der Bewegungsvektorfeld-Rekonstruktionsparameter (FP, **c, B**) ein Bewegungsvektorfeld ($V'_n$) rekonstruiert wird und darauf basierend eine Bildbereichsprädiktion ($I'_n$) ermittelt wird.

11. Verfahren nach Anspruch 10, **dadurch gekennzeichnet, dass** die Bewegungsvektorfeld-Rekonstruktionsparameter (FP) von relevanten Merkmalspunkten (FP) des Bewegungsvektorfelds ($V_n$) jeweils eine Ortsinformation (FPO) und zumindest eine Bewegungsvektorkomponente (FPK) eines Bewegungsvektors an dem betreffenden relevanten Merkmalspunkt (FP) umfassen, und zur Rekonstruktion des Bewegungsvektorfelds ($V'_n$) Bewegungsvektoren an anderen Bildpunkten auf Basis der Bewegungsvektoren an den relevanten Merkmalspunkten (FP) interpoliert oder extrapoliert werden.

12. Verfahren zur Übertragung und/oder Speicherung einer Bildsequenz (IS) wobei Bildbereiche ($I_n$) der Bildsequenz (IS) vor der Übertragung und/oder Speicherung mit einem Verfahren nach einem der Ansprüche 1. bis 9 kodiert werden und nach der Übertragung und/oder nach einer Entnahme aus dem Speicher (S) mit einem Verfahren nach einem der Ansprüche 10 oder 11 wieder dekodiert werden.

13. Bildkodiervorrichtung (1, 1') zur Kompression einer Bildsequenz (IS) umfassend folgende Komponenten:

- eine Bewegungsvektorfeld-Ermittlungseinheit (2) zur Ermittlung eines dichten Bewegungsvektorfelds ($V_n$) für einen aktuellen Bildbereich (In) der Bildsequenz (IS) durch Vergleich mit zumindest einem weiteren Bildbereich ($I_{n-1}$) der Bildsequenz (IS),

- eine Konfidenzvektorfeld-Ermittlungseinheit (3) zur Ermittlung eines Konfidenzvektorfeldes ($K_n$) für den aktuellen Bildbereich ($I_n$), welches für jeden Bewegungsvektor des Bewegungsvektorfelds ($V_n$) zumindest einen Konfidenzwert angibt,

- eine Rekonstruktionsparameter-Ermittlungseinheit (4,4') zur Ermittlung von Bewegungsvektorfeld-Rekonstruktions— parametern (FP, **c, B**) für den aktuellen Bildbereich ($I_n$) auf Basis des Bewegungsvektorfelds ($V_n$) und des Konfidenzvektorfelds ($K_n$).

14. Bilddekodiervorrichtung (20, 20') zur Dekodierung von Bildbereiche einer Bildsequenz (IS), welche mit einer Bildkodiervorrichtung (1, 1') nach Anspruch 13 kodiert wurden, mit

- einer Bewegungsvektorfeld-Rekonstruktionseinheit (24, 24'), um für einen aktuellen Bildbereich ($I_n$) auf Basis der Bewegungsvektorfeld-Rekonstruktionsparameter (FP, **c, B**) ein Bewegungsvektorfeld ($V'_n$) zu rekonstruieren,

- und einer Prädiktionsbild-Generierungeinheit (26), um basierend auf dem rekonstruierten Bewegungsvektorfeld ($V'_n$) eine Bildbereichsprädiktion ($I'_n$) zu ermitteln.

15. System zur Übertragung und/oder Speicherung einer Bildsequenz (IS) umfassend eine Bildkodiervorrichtung (1, 1') nach Anspruch 13 und eine Bilddekodiervorrichtung (20, 20') nach Anspruch 14.

16. Computerprogramm, welches direkt in einen Speicher eines Bildverarbeitungsrechners (1, 1', 20, 20') ladbar ist, mit Programmcodeabschnitten, um alle Schritte eines Verfahrens nach einem der Ansprüche 1 bis 12 auszuführen, wenn das Pro— gramm in dem Bildverarbeitungsrechner (1, 1', 20, 20') ausgeführt wird.

FIG 1

FIG 2

FIG 3

FIG 4

FIG 5

EP 2 490 448 A1

FIG 6

FIG 7

FIG 8

FIG 9

FIG 10

FIG 11

FIG 12

FIG 13

FIG 14

FIG 15

FIG 16

FIG 17

FIG 18

EP 2 490 448 A1

FIG 19

EP 2 490 448 A1

FIG 20

# EP 2 490 448 A1

| Europäisches Patentamt European Patent Office Office européen des brevets | **EUROPÄISCHER RECHERCHENBERICHT** | **Nummer der Anmeldung** EP 11 17 3094 |
|---|---|---|

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A,D | ANANDAN P: "A COMPUTATIONAL FRAMEWORK AND AN ALGORITHM FOR THE MEASUREMENT OF VISUAL MOTION", INTERNATIONAL JOURNAL OF COMPUTER VISION, KLUWER ACADEMIC PUBLISHERS, NORWELL, US, Bd. 2, Nr. 3, 1. Januar 1989 (1989-01-01), Seiten 283-310, XP008055537, ISSN: 0920-5691, DOI: 10.1007/BF00158167 * Zusammenfassung; Abbildung 1 * ----- | 1-16 | INV. H04N7/26 H04N7/50 |
| A,D | SOO-CHUL HAN ET AL: "Video Compression With Dense Motion Fields", IEEE TRANSACTIONS ON IMAGE PROCESSING, IEEE SERVICE CENTER, PISCATAWAY, NJ, US, Bd. 10, Nr. 11, 1. November 2001 (2001-11-01), XP011025860, ISSN: 1057-7149 * Section 1.2 "Framework Overview" * * Section III "Motion field encoding" * ----- | 1-16 | |
| A | EP 1 169 867 A1 (MITSUBISHI ELECTRIC INF TECH [GB] MITSUBISHI ELECTRIC INF TECH [GB]; M) 9. Januar 2002 (2002-01-09) * Absätze [0001], [0006], [0011]; Abbildung 2 * ----- | 1-16 | RECHERCHIERTE SACHGEBIETE (IPC) H04N |

Der vorliegende Recherchenbericht wurde für alle Patentansprüche erstellt

| Recherchenort | Abschlußdatum der Recherche | Prüfer |
|---|---|---|
| München | 16. Januar 2012 | Oelbaum, Tobias |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 11 17 3094

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-01-2012

| Im Recherchenbericht angeführtes Patentdokument | Datum der Veröffentlichung | Mitglied(er) der Patentfamilie | Datum der Veröffentlichung |
|---|---|---|---|
| EP 1169867 A1 | 09-01-2002 | AU 3304900 A | 04-10-2000 |
| | | CN 1343424 A | 03-04-2002 |
| | | CN 1717050 A | 04-01-2006 |
| | | CN 1882087 A | 20-12-2006 |
| | | DE 60022018 D1 | 22-09-2005 |
| | | DE 60022018 T2 | 29-06-2006 |
| | | EP 1169867 A1 | 09-01-2002 |
| | | GB 2348064 A | 20-09-2000 |
| | | JP 2000295628 A | 20-10-2000 |
| | | JP 2011055536 A | 17-03-2011 |
| | | US 6944227 B1 | 13-09-2005 |
| | | US 2005207500 A1 | 22-09-2005 |
| | | WO 0056076 A1 | 21-09-2000 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **CHUNG-LIN HUANG ; CHAO-YUEN HSU.** A new motion compensation method for image sequence coding using hierarchical grid interpolation. *IEEE Transactions on Circuits and Systems for Video Technology,* Februar 1994, vol. 4 (1), 42-52

- **S.C. HAN ; C.I. PODILCHUK.** Video compression with dense motion fields. *IEEE Transactions on Image Processing,* Januar 2001, vol. 10 (11), 1605-12
- **P. ANANDAN.** A Computational Framework and an Algorithmen for the Measurement of Visual Motion. *Int. Journal of Computer Vision,* Januar 1989, vol. 2 (3), 283-310